# EUROPEAN PATENT APPLICATION

(11) **EP 4 780 126 A1**
(43) Date of publication of application: **22.07.2026**
(21) Application number: 23952515.7
(22) Date of filing: 19.09.2023
(51) Int. Cl.: H04W 76/10

(54) **COMMUNICATION METHOD AND DEVICE FOR SESSION MANAGEMENT OF NETWORK DEVICE, AND MEDIUM**

(71) Applicant: HUAWEI TECHNOLOGIES CO., LTD., Shenzhen 518129 (CN)
(72) Inventor: WANG, Junfan, Shenzhen, Guangdong 518129 (CN); YAN, Xueqiang, Shenzhen, Guangdong 518129 (CN); XI, Yan, Shenzhen, Guangdong 518129 (CN); XING, Weijun, Shenzhen, Guangdong 518129 (CN); ZHAO, Mingyu, Shenzhen, Guangdong 518129 (CN)
(74) Representative: Goddar, Heinz J.
(86) International application number: PCT/CN2023/119672
(87) International publication number: WO 2025/059850

(57) **Abstract**

Embodiments of the present disclosure relate to a communication method, a communication device, a medium, and a program product. In the method, an access network device sends a first request to an access and mobility management function AMF, where the first request is used to request to establish a session between the access network device and a user plane function UPF, and the first request includes identification information of the access network device. Then, the access network device receives, from a session management function SMF through the AMF, first configuration information for the session, where the first configuration information includes configuration information for an uplink channel from the access network device to the UPF. In this way, the access network device can actively initiate an establishment procedure for the session between the access network device and the UPF, and finally establish a data path between the access network device and the UPF.

## Description

### TECHNICAL FIELD

Embodiments of the present disclosure relate to the electronic field, and more specifically, to a communication method for managing a network device session, a communication device, a communication system, a computer-readable storage medium, and a computer program product.

### BACKGROUND

With reduction of computing and storage costs and emergence of a large quantity of low-latency services and local applications, computing, storage, and intelligent algorithms that depend on the computing and the storage tend to be deployed at a network edge close to a data source, forming a data-centric network architecture. A basic function of a mobile communication network also starts to transit from an information transmission pipeline to a data management and control platform. In some applications, a 6th generation (6th generation, 6G) communication network is a data producer and provider, providing a trusted data service for an intelligent application, and is also a data consumer, improving network performance and operation efficiency by using data-driven intelligent applications. However, a network architecture and a service procedure of a 5th generation (5th generation, 5G) communication network cannot support a variety of new services of the 6G communication network. For example, because "on-path computing" and "arbitrary topology" cannot be supported by a user plane of the 5G communication network, the user plane of the 5G cannot be used to meet a requirement of bearing a service and data in the 6G.

### SUMMARY

In view of this, embodiments of the present disclosure provide a communication method, a communication device, a communication system, and a computer-readable storage medium, to resolve a problem that a conventional session mechanism cannot support a data service scenario in which an access network device generates data.

According to a first aspect of the present disclosure, a method for managing a network device session is provided. The method includes: sending a first request to an access and mobility management function AMF, where the first request is used to request to establish a session between an access network device and a user plane function UPF, and the first request includes identification information of the access network device; and receiving first configuration information from a session management function SMF through the AMF, where the first configuration information includes configuration information for an uplink channel from the access network device to the UPF. In this way, the access network device can actively initiate an establishment procedure for the session between the access network device and the UPF, and finally establish a data path between the access network device and the UPF.

In some embodiments, the first request further includes at least one of the following: indication information of a device that initiates the first request; or identification information of a data service task associated with the first request. In this way, the session for the access network device can be established. Based on the indication information of the device that initiates the first request, a conventional session mechanism between a terminal device and the UPF can be reused, and a session policy does not need to be redesigned, so that resource consumption is reduced.

In some embodiments, the first request further includes identification information of a data service task associated with the first request, and the identification information of the data service task includes indication information of a device that initiates the first request. In this way, the session for the access network device can be established. Based on the indication information of the device that initiates the first request, a conventional session mechanism between a terminal device and the UPF can be reused, and a session policy does not need to be redesigned, so that resource consumption is reduced.

In some embodiments, the method further includes: sending a second request to the AMF, where the second request is used to request to release the session between the access network device and the UPF, and the second request includes identification information of the session; and receiving, from the SMF through the AMF, a response message corresponding to the second request. In this way, the session between the access network device and the UPF can be released.

In some embodiments, the method further includes: sending a third request to an AMF, where the third request is used to request to register the access network device, and the third request includes the identification information of the access network device; receiving, from the AMF, rule information used to establish the session; and receiving, from the AMF, a response message corresponding to the third request. In this way, the access network device can be registered, thereby facilitating subsequent establishment of the session between the access network device and the UPF.

In some embodiments, the method further includes: sending a fourth request to the AMF, where the fourth request is used to request to deregister the access network device, and the deregistration request includes the identification information of the access network device; and receiving, from the AMF, a response message corresponding to the fourth request. In this way, the access network device can be deregistered with low signaling overheads.

In some embodiments, the first request is sent through an N2 interface, and the first configuration information is received through the N2 interface. In this way, a session establishment procedure initiated by the access network device can be implemented.

According to a second aspect of the present disclosure, a method for managing a network device session is provided. The method includes: receiving a first request from an access network device, where the first request is used to request to establish a session between the access network device and a user plane function UPF, and the first request includes identification information of the access network device; and sending the first request to a session management function SMF. In this way, an establishment procedure that is actively initiated by the access network device for the session between the access network device and the UPF can be established with low signaling overheads, and a data path between the access network device and the UPF is finally established.

In some embodiments, the first request further includes at least one of the following: indication information of a device that initiates the first request; or identification information of a data service task associated with the first request. In this way, the session for the access network device can be established. Based on the indication information of the device that initiates the first request, a conventional session mechanism between a terminal device and the UPF can be reused, and a session policy does not need to be redesigned, so that resource consumption is reduced.

In some embodiments, the first request further includes identification information of a data service task associated with the first request, and the identification information of the data service task includes indication information of a device that initiates the first request. In this way, the session for the access network device can be established. Based on the indication information of the device that initiates the first request, a conventional session mechanism between a terminal device and the UPF can be reused, and a session policy does not need to be redesigned, so that resource consumption is reduced.

In some embodiments, the method further includes: receiving a third request from the access network device, where the third request is used to request to register the access network device, and the third request includes the identification information of the access network device; configuring context information of the access network device based on the third request; sending the third request to a core network device, where the core network device is configured to manage subscription data associated with the access network device; receiving, from the core network device, a response message corresponding to the third request; sending, to a policy control function PCF, a fifth request associated with the access network device, where the fifth request is used to request rule information associated with the access network device; receiving, from the PCF, the rule information used to establish the session; sending, to the access network device, the rule information used to establish the session; and sending, to the access network device, the response message corresponding to the third request. In this way, the access network device can be registered with low signaling overheads, thereby facilitating subsequent establishment of the session between the access network device and the UPF.

In some embodiments, the method further includes: receiving a sixth request associated with the access network device from a core network device, where the sixth request is used to request to configure context information of the access network device, and the core network device is configured to manage subscription data associated with the access network device; configuring the context information of the access network device based on the sixth request; sending, to the core network device, a response message corresponding to the sixth request; sending, to a PCF, a fifth request associated with the access network device, where the fifth request is used to request rule information associated with the access network device; receiving, from the PCF, the rule information used to establish the session; and sending, to the access network device, the rule information used to establish the session. In this way, the access network device can be registered with low signaling overheads, thereby facilitating subsequent establishment of the session between the access network device and the UPF.

In some embodiments, the method further includes: receiving a fourth request from the access network device, where the fourth request is used to request to deregister the access network device, and the fourth request includes the identification information of the access network device; sending the fourth request to the core network device, where the core network device is configured to manage the subscription data associated with the access network device; receiving, from the core network device, a response message corresponding to the fourth request; sending, to the PCF, a seventh request associated with the access network device, where the sixth request is used to request to release the rule information for the session between the access network device and the UPF; receiving, from the PCF, a response message corresponding to the seventh request; sending, to the access network device, the response message corresponding to the fourth request; and releasing the context information of the access network device. In this way, the access network device can be deregistered with low signaling overheads.

In some embodiments, the method further includes: receiving a second request from the access network device, where the second request includes identification information of the session; and sending the second request to the SMF. In this way, the session between the access network device and the user plane function UPF can be deleted with low signaling overheads.

According to a third aspect of the present disclosure, a method for managing a network device session is provided. The method includes: receiving a first request from an access and mobility management function AMF, where the first request is used to request to establish a session between an access network device and a user plane function UPF, and the first request includes identification information of the access network device; and sending first configuration information to the access network device through the AMF, where the first configuration information includes configuration information for an uplink channel from the access network device to the UPF. In this way, an establishment procedure that is actively initiated by the access network device for the session between the access network device and the UPF can be established with low signaling overheads, and a data path between the access network device and the UPF is finally established.

In some embodiments, the first request further includes at least one of the following: indication information of a device that initiates the first request; or identification information of a data service task associated with the first request. In this way, the session for the access network device can be established. Based on the indication information of the device that initiates the first request, a conventional session mechanism between a terminal device and the UPF can be reused, and a session policy does not need to be redesigned, so that resource consumption is reduced.

In some embodiments, the first request further includes identification information of a data service task associated with the first request, and the identification information of the data service task includes indication information of a device that initiates the first request. In this way, the session for the access network device can be established. Based on the indication information of the device that initiates the first request, a conventional session mechanism between a terminal device and the UPF can be reused, and a session policy does not need to be redesigned, so that resource consumption is reduced.

In some embodiments, the method further includes: sending, based on determining that the indication information of the device is access network device indication information, an eighth request associated with the access network device to a core network device, where the eighth request is used to request subscription data associated with the access network device, and the core network device is configured to manage the subscription data associated with the access network device; and receiving the subscription data from the core network device. In this way, the access network device can be authenticated, thereby improving communication security.

In some embodiments, the method further includes: receiving a second request from the AMF, where the second request is used to request to release the session between the access network device and the UPF, and the second request includes identification information of the session; sending, to the access network device and the UPF through the AMF, an indication for releasing the session; sending, to the access network device through the AMF, a response message corresponding to the second request; and releasing context information associated with the session. In this way, the session between the access network device and the user plane function UPF can be deleted with low signaling overheads.

According to a fourth aspect of the present disclosure, a method for managing a network device session is provided. The method includes: sending a third request to an access and mobility management function AMF, where the third request is used to request to register an access network device, and the third request includes identification information of the access network device; receiving, from the AMF, rule information used to establish a session; and receiving, from the AMF, a response message corresponding to the third request. In this way, the access network device can be registered with low signaling overheads, thereby facilitating subsequent establishment of the session between the access network device and the UPF.

In some embodiments, the method further includes: sending a fourth request to the AMF, where the fourth request is used to request to deregister the access network device, and the fourth request includes the identification information of the access network device; and receiving, from the AMF, a response message corresponding to the fourth request. In this way, the access network device can be deregistered with low signaling overheads.

According to a fifth aspect of the present disclosure, a method for managing a network device session is provided. The method includes: receiving a third request, where the third request is used to request to register an access network device, and the third request includes identification information of the access network device; and storing context information associated with the access network device, where the context information is used to support a session between the access network device and a user plane function UPF. In this way, the access network device can be registered with low signaling overheads, thereby facilitating subsequent establishment of the session between the access network device and the UPF.

In some embodiments, the third request is received from an operation, administration and maintenance OAM device, and the method further includes: sending, to an AMF, a sixth request associated with the access network device, where the sixth request is used to request to configure context information of the access network device; receiving, from the AMF, a response message corresponding to the sixth request; and sending, to a PCF, a ninth request associated with the access network device, where the ninth request is used to request to update rule information associated with the access network device. In this way, context configuration and policy update of the access network device can be performed, thereby facilitating subsequent establishment of the session between the access network device and the UPF.

In some embodiments, the method further includes: receiving a fourth request from the AMF, where the fourth request includes the identification information of the access network device; releasing the context information associated with the access network device; and sending, to the AMF, a response message corresponding to the fourth request. In this way, the access network device can be deregistered with low signaling overheads.

In some embodiments, the method further includes: receiving an eighth request associated with the access network device from a session management function SMF, where the eighth request is used to request subscription data associated with the access network device; and sending the subscription data associated with the access network device to the SMF. In this way, the access network device can be authenticated with low signaling overheads, thereby improving communication security.

According to a sixth aspect of the present disclosure, a communication apparatus is provided. The apparatus includes a processor. The processor is connected to a memory. The memory stores instructions. When the instructions are executed by the processor, the apparatus is caused to perform the method according to any one of the first aspect or embodiments of the first aspect. In some embodiments, the apparatus further includes the memory.

In some embodiments, the apparatus is a chip.

According to a seventh aspect of the present disclosure, a communication apparatus is provided. The apparatus includes a processor. The processor is connected to a memory. The memory stores instructions. When the instructions are executed by the processor, the apparatus is caused to perform the method according to any one of the second aspect or embodiments of the second aspect.

In some embodiments, the apparatus further includes the memory.

In some embodiments, the apparatus is a chip.

According to an eighth aspect of the present disclosure, a communication apparatus is provided. The apparatus includes a processor. The processor is connected to a memory. The memory stores instructions. When the instructions are executed by the processor, the apparatus is caused to perform the method according to any one of the third aspect or embodiments of the third aspect.

In some embodiments, the apparatus further includes the memory.

In some embodiments, the apparatus is a chip.

According to a ninth aspect of the present disclosure, a communication apparatus is provided. The apparatus includes a processor. The processor is connected to a memory. The memory stores instructions. When the instructions are executed by the processor, the apparatus is caused to perform the method according to any one of the fourth aspect or embodiments of the fourth aspect.

In some embodiments, the apparatus further includes the memory.

In some embodiments, the apparatus is a chip.

According to a tenth aspect of the present disclosure, a communication apparatus is provided. The apparatus includes a processor. The processor is connected to a memory. The memory stores instructions. When the instructions are executed by the processor, the apparatus is caused to perform the method according to any one of the fifth aspect or embodiments of the fifth aspect.

In some embodiments, the apparatus further includes the memory.

In some embodiments, the apparatus is a chip.

According to an eleventh aspect of the present disclosure, a system is provided. The system includes the communication apparatus according to the fifth aspect, the communication apparatus according to the sixth aspect, the communication apparatus according to the seventh aspect, the communication apparatus according to the eighth aspect, and the communication apparatus according to the tenth aspect.

According to a twelfth aspect of the present disclosure, a computer-readable storage medium is provided. The computer-readable storage medium stores instructions, and when the instructions are run, the method according to any one of the first aspect to the fifth aspect or embodiments of the first aspect to the fifth aspect is performed.

According to a thirteenth aspect of the present disclosure, a computer program product is provided. The computer program product includes instructions. When the instructions are run on a computer, the computer is caused to perform the method according to any one of the first aspect to the fifth aspect or embodiments of the first aspect to the fifth aspect.

It should be understood that the content described in the summary is not intended to limit key or important features of embodiments of the present disclosure or limit the scope of the present disclosure. Other features of the present disclosure will be readily understood through the following description.

### BRIEF DESCRIPTION OF DRAWINGS

The foregoing and other features, advantages, and aspects of embodiments of the present disclosure become more apparent in conjunction with the accompanying drawings and with reference to the following detailed description. In the accompanying drawings, same or similar reference numerals indicate same or similar elements.
FIG. 1A is a diagram of a network environment according to some embodiments of the present disclosure;
FIG. 1B is a diagram of a data plane function architecture of a 6G mobile communication network according to some embodiments of the present disclosure;
FIG. 2A is a diagram of signaling interaction in a method for registering an access network device according to some embodiments of the present disclosure;
FIG. 2B is a diagram of signaling interaction in a method for establishing a session according to some embodiments of the present disclosure;
FIG. 3A is a diagram of signaling interaction in an example implementation of a method for registering an access network device according to some embodiments of the present disclosure;
FIG. 3B is a diagram of signaling interaction in another example implementation of a method for registering an access network device according to some embodiments of the present disclosure;
FIG. 4 is a diagram of signaling interaction in an example implementation of a method for deregistering an access network device according to some embodiments of the present disclosure;
FIG. 5A is a diagram of signaling interaction in an example implementation of a method for establishing a session according to some embodiments of the present disclosure;
FIG. 5B is a diagram of signaling interaction in another example implementation of a method for establishing a session according to some embodiments of the present disclosure;
FIG. 5C is a diagram of signaling interaction in still another example implementation of a method for establishing a session according to some embodiments of the present disclosure;
FIG. 6 is a diagram of signaling interaction in an example implementation of a method for deleting a session according to some embodiments of the present disclosure;
FIG. 7 is a schematic flowchart of a method implemented at an access network device according to some embodiments of the present disclosure;
FIG. 8 is a schematic flowchart of another method implemented at an access network device according to some embodiments of the present disclosure;
FIG. 9 is a schematic flowchart of a method implemented at an AMF according to some embodiments of the present disclosure;
FIG. 10 is a schematic flowchart of a method implemented at an SMF according to some embodiments of the present disclosure;
FIG. 11 is a schematic flowchart of a method implemented at a data management core network device according to some embodiments of the present disclosure;
FIG. 12 is a diagram of main composition of an example device in a possible implementation according to an embodiment of the present disclosure; and
FIG. 13 is a simplified block diagram of an example device in a possible implementation according to an embodiment of the present disclosure.

### DESCRIPTION OF EMBODIMENTS

Embodiments of the present disclosure are described in more detail in the following with reference to accompanying drawings. Although some embodiments of the present disclosure are shown in the accompanying drawings, it should be understood that the present disclosure can be implemented in various forms, and should not be construed as being limited to embodiments described herein, and instead, these embodiments are provided for a more thorough and complete understanding of the present disclosure. It should be understood that the accompanying drawings and embodiments of the present disclosure are merely used as examples and are not intended to limit the protection scope of the present disclosure.

In the descriptions of embodiments of the present disclosure, the term "including" and similar terms thereof should be understood as non-exclusive inclusions, that is, "including but not limited to". The term "based on" should be understood as "at least partially based on". The term "one embodiment" or "this embodiment" should be understood as "at least one embodiment". The terms "first", "second", and the like may indicate different objects or a same object. The term "and/or" indicates at least one of two items associated with the term. For example, "A and/or B" indicates A, B, or A and B. The following may further include other explicit and implied definitions.

Embodiments of the present disclosure may be implemented according to any appropriate communication protocol, including but not limited to: cellular communication protocols such as a 3rd generation (3rd Generation, 3G) communication protocol, a 4th generation (4G) communication protocol, a 5th generation (5G) communication protocol, and a future communication protocol (for example, 6th generation (6G)), wireless local area network communication protocols such as the Institute of Electrical and Electronics Engineers (institute of electrical and electronics engineers, IEEE) 802.11, and/or any other protocols currently known or to be developed in future.

The technical solutions of embodiments of the present disclosure are applied to communication systems that comply with any appropriate communication protocol, for example, a long term evolution (long term evolution, LTE) system, a wideband code division multiple access (wideband code division multiple access, WCDMA) system, a code division multiple access 2000 (code division multiple access, CDMA 2000) system, a time division-synchronization code division multiple access (time division-synchronization code division multiple access, TD-SCDMA) system, a frequency division duplex (frequency division duplex, FDD) system, a time division duplex (time division duplex, TDD) system, a 5th generation (5G) system (for example, new radio (new radio, NR)), and a future communication system (for example, a sixth generation (6G) system).

For the purpose of description, the following describes embodiments of this application in a background of a cellular communication system in the 3rd generation partnership project (3rd Generation Partnership Project, 3GPP). However, it should be understood that embodiments of the present disclosure are not limited to the communication system, but may be applied to any communication system having a similar problem, for example, a wireless local area network (Wireless Local Area Network, WLAN), a wired communication system, or another communication system developed in the future.

The term "terminal" or "terminal device" used in the present disclosure means any terminal device that can perform wired or wireless communication with a network device or between terminal devices. The terminal device may be sometimes referred to as user equipment or UE. The terminal device may be any type of mobile terminal, fixed terminal, or portable terminal. The terminal device may be various wireless communication devices that have a wireless communication function. With emergence of internet of things (internet of things, IoT) technologies, more devices that previously do not have a communication function, for example, but not limited to, a household appliance, a transportation vehicle, a tool device, a service device, and a service facility, start to obtain a wireless communication function by being configured with a wireless communication unit, to access a wireless communication network to accept remote control. Such a device has the wireless communication function because the device is configured with the wireless communication unit, and is therefore classified as a wireless communication device. For example, the terminal device may include a mobile cellular phone, a cordless phone, a mobile terminal (Mobile Terminal, MT), a mobile station, a mobile device, a wireless terminal, a handheld device, a client, a subscription station, a portable subscription station, an Internet node, a communicator, a desktop computer, a laptop computer, a notebook computer, a tablet computer, a personal communication system device, a personal navigation device, a personal digital assistant (Personal Digital Assistant, PDA), a wireless data card, a wireless modem (modulator demodulator, Modem), a positioning device, a radio broadcast receiver, an e-book device, a game device, an IoT device, a vehicle-mounted device, an aircraft, a virtual reality (Virtual Reality, VR) device, an augmented reality (Augmented Reality, AR) device, a wearable device (for example, a smartwatch), a terminal device in a 5G network or any terminal device in an evolved public land mobile network (Public Land Mobile Network, PLMN), another device that can be used for communication, or any combination thereof. The terminal device and an access network device communicate with each other by using an air interface technology.

The term "network node" or "network device" used in the present disclosure is an entity or a node that may be configured to communicate with the terminal device, for example, may be an access network device. The access network device may be an apparatus that is deployed in a radio access network and that provides a wireless communication function for a mobile terminal, for example, may be a radio access network (Radio Access Network, RAN) network device. The access network device may include various types of base stations. The base station is configured to provide a radio access service for the terminal device. Specifically, each base station corresponds to a service coverage area, and a terminal device entering the area may communicate with the base station by using a radio signal, to receive the radio access service provided by the base station. The service coverage areas of base stations may overlap, and a terminal device in an overlapping area may receive radio signals from a plurality of base stations. Therefore, the plurality of base stations may simultaneously provide services for the terminal device. Based on a size of the provided service coverage area, the access network device may include a macro base station for providing a macro cell (Macro cell), a micro base station for providing a micro cell (micro cell), a pico base station for providing a pico cell, and a femto base station for providing a femto cell (femto cell). In addition, the access network device may further include various forms of relay stations, access points, remote radio units (remote radio units, RRUs), radio frequency heads (radio heads, RHs), remote radio heads (remote radio heads, RRHs), and the like. In systems using different radio access technologies, the access network device may have different names. For example, the access network device is referred to as an evolved NodeB (evolved NodeB, eNB or eNodeB) in a long term evolution (Long Term Evolution, LTE) system network, is referred to as a NodeB (NodeB, NB) in a 3G network, and may be referred to as a gNodeB (gNB) or an NR NodeB (NR NB) in a 5G network.

It should be understood that in the technical solutions provided in embodiments of the present disclosure, some repeated parts may not be described again in the following descriptions of specific embodiments, but it should be considered that these specific embodiments are mutually referenced and may be combined with each other.

Data is generated, flows, is consumed in a communication network, plays a significant role, and is considered as "new oil" of a data-driven society. The 6G network will become an infrastructure for various key information activities. With the development of network scale, new technologies, applications, and the like, there is more data in the network, and the data is more important. A complete service architecture is required to efficiently use data throughout an entire life cycle including data generation, collection, storage, transmission, processing, analysis, exchange, sharing, and the like. A data service is a framework based on data collection, preprocessing, distribution, release, analysis, and the like, meets requirements of data laws and regulations, considers both data sharing and security, and provides data as a service product. Based on analysis of data value discovery, regulatory requirements, technology development trends, business monetization modes, and the like, in the 6G era, a requirement for the data service is more urgent, and different from a conventional monolithic data service architecture, a unified data service architecture is required to meet the requirement.

A conventional session-oriented network is mainly used to bear a session. That is, information exchange between two communication nodes mainly occurs between humans and between humans and machines. The session is established based on establishment of a communication path. A node on the path is used only for forwarding a session packet and does not process the packet. In addition, forwarding is performed based on a destination address route of the packet. With generation and consumption of massive data in the future, data-oriented networks are increasingly required. For example, massive data (such as artificial intelligence (artificial intelligence, AI) data and sensing data) needs to be borne on data pipelines that include functions such as network collection, processing, transmission, storage, and analysis. A large amount of data is generated by machines/algorithms and consumed by machines/algorithms. Establishment of the data pipeline also depends on establishment of a communication path of an underlying network. However, each node on the data pipeline needs to perform corresponding processing (for example, on-path-packet-processing (on-path-packet-processing)) on a packet, and then forward the packet to a next node, specifically, forward the packet based on a data service identifier. Differences between session-oriented routing/forwarding and a data-oriented forwarding mechanism are as follows:

In the session-oriented routing/forwarding mode:
- header information used for routing remains unchanged;
- a data valid payload of the packet remains unchanged; and
- there is a point-to-point path.

In the data-oriented forwarding mechanism:
- header information used for routing is variable;
- a data valid payload of the packet is changing (data in-path processing); and
- there is a flexible topology.

Data is managed and processed in a pipeline form. Data flows in the pipeline, and different functions such as collection, transmission, storage, and processing are implemented between nodes that the data flows through. All network elements in a communication system, such as a terminal, a base station, and a core network, may participate in a data service. In a data pipeline, a data packet is forwarded based on a data service and a data pipeline identifier. A core of a 5G user plane is to establish a protocol data unit (PDU) session, to be specific, establish a session between a user terminal and a data network. However, data cannot be opened and processed on a session intermediate node. If a conventional user plane is used to bear all 6G network data, the data can only be terminated on a user plane function (user plane function, UPF). As a result, distributed management and control of sensing data, AI data, network behavior, and status data cannot be met. A data plane requires a new protocol stack to support a flexible data service requirement.

With reduction of computing and storage costs and emergence of a large quantity of low-latency services and local applications, computing, storage, and intelligent algorithms that depend on the computing and the storage tend to be deployed at a network edge close to a data source, forming a data-centric network architecture. A basic function of a mobile communication network also starts to transit from an information transmission pipeline to a data management and control platform. Native sensing and intelligence are two major new capabilities of a 6G network. The native sensing uses a sensor device to sense massive data generated by a network status, an ambient environment, and user/device behavior. The native intelligence uses technologies such as AI and digital twin for modeling analysis and automatic decision-making to improve network operation efficiency and system performance, or provide data services for intelligent applications. It can be learned that the 6G network is a data producer and provider, providing a trusted data service for an intelligent application, and is also a data consumer, improving network performance and operation efficiency by using the data-driven intelligent application. Therefore, how to optimize data governance, explore a data value, and provide trusted data services poses new challenges to 6G network design.

As a data transmission "pipeline", a conventional communication network integrates single-point technologies to implement data processing, data supervision, and security and privacy protection, and provides specific data service capabilities for intelligent applications. However, the conventional communication network lacks a normalized data service framework and faces a plurality of challenges at a data governance level. A 5G communication network is constructed based on sessions, and a user plane is used to bear session data. Because "on-path computing" and "arbitrary topology" required by a 6G data bearer cannot be supported, the user plane cannot bear a new data type of the 6G network. A 5G user plane session connection implements information exchange between two communication devices. Specifically, a PDU session provides an end-to-end user plane connection between a user terminal device and a network. 6G data plane transmission includes functions such as data collection, preprocessing, forwarding, storage, and analysis. User plane transmission is for communication connections between humans or between humans and machines, and data processed on a data plane is produced and consumed by machines/algorithms. The 5G user plane session implements only data packet transmission, while a 6G data plane transport network needs to implement on-path computing. In a data pipeline, data is converted and optimized to achieve states required by data analysis and intelligent applications. In terms of data forwarding behavior, a data packet of a session is forwarded based on a destination address; while in the data pipeline, a data packet is forwarded based on a data service and a data pipeline identifier. Data forwarding based on the 5G user plane session belongs to a TCP/IP layer, and data forwarding on the data plane belongs to an application layer. In addition, a session-based topology is a point-to-point connection, and the 6G data plane needs to support arbitrary topology structure (such as a tree structure required for data distribution and data aggregation). If a conventional user plane is used to bear all 6G network data, the data can be started and terminated only at two ends of a PDU session, that is, the user equipment (user equipment, UE) or UPF. As a result, distributed management and control of sensing data, AI data, network behavior, and status data cannot be met. Therefore, an independent data plane needs to be introduced to the 6G network to construct an architecture-level unified, trusted, and dynamic data service framework. In addition to meeting regulatory requirements of data laws and regulations, the data plane improves data analysis and processing efficiency, implements cross-domain and cross-vendor data sharing, and monetizes data value through various intelligent applications.

**Table 1: Comparison between data plane data bearers of 5G and 6G systems**

| | 5G user plane data bearer | 6G data plane data bearer |
|---|---|---|
| Functions | A PDU session provides an end-to-end user plane connection between user equipment and a network | A distributed data pipeline includes functions such as data collection, preprocessing, forwarding, storage, and analysis |
| Start and termination points | UE and UPF | Any network element and terminal device |
| Data forwarding | A forwarding device forwards only a data packet | On-path computing needs to be implemented: In a data pipeline, data is converted and optimized when being forwarded, to reach a state that the data can be analyzed and applied |
| Forwarding rule | A data packet is forwarded based on a destination address | A data packet is forwarded based on a data service and a data pipeline identifier |
| Topology structure | Point-to-point connection | Arbitrary topology |

In a conventional data transmission method, data is transmitted by establishing a data channel from UE to a UPF, and data generated by an access network device, for example, AI data or sensing data, cannot be transmitted. To systematically cope with data service challenges and resolve a problem that a user plane and a data-driven architecture of a conventional mobile network cannot meet requirements of new 6G services and data, an independent data plane is introduced for the 6G network based on data and data services of the 6G mobile communication network. The data plane aims to construct a unified trusted data service framework to resolve a problem of data silos. In addition to meeting regulatory requirements of data laws and regulations, the data plane provides a trusted data service to implement cross-domain and cross-vendor data sharing, improve operation efficiency, and monetize a data value. More specifically, it is expected to resolve a data service scenario in which a conventional session mechanism cannot support data generated by the access network device. Further, it is expected to leverage current QoS and charging policies with as few changes to communication standards as possible.

In view of this, an embodiment of the present disclosure provides a communication method, so that an access network device can actively initiate a session establishment procedure, and finally establish a data path between the access network device and a user plane function, to bear data (for example, AI data or sensing data) generated or processed by the access network device. In some embodiments, the session establishment procedure actively initiated by the access network device can reuse a conventional session mechanism between a terminal device and a UPF, and does not need to redesign a session policy, thereby reducing resource consumption. To make objectives, technical solutions, and advantages of the present disclosure clearer, the following further describes the present disclosure in detail with reference to accompanying drawings. Specific operation methods, function descriptions, and the like in method embodiments may also be applied to apparatus embodiments or system embodiments.

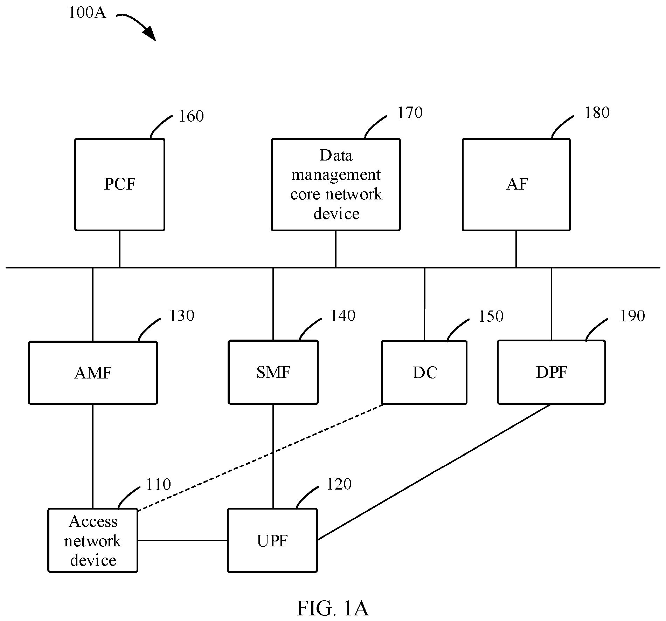

FIG. 1A is a diagram of a network environment according to some embodiments of this application. As shown in FIG. 1A, a system 100A may include an access network device 110, a user plane function (user plane function, UPF) 120, an access and mobility management function (access and mobility management function, AMF) 130, a session management function (session management function, SMF) 140, and a data controller (data controller, DC) 150, and may further include a policy control function (policy control function, PCF) 160, a data management core network device 170, an application function (application function, AF) 180, or a data processing function (data processing function, DPF) 190.

Although the DC 150 is shown in FIG. 1A as being deployed on a core network (core network, CN) side, this is merely an example. In some embodiments, the DC may be deployed on an access network device side. The SMF 140 and the DC 150 may directly communicate with each other, or may communicate with each other through forwarding by another device. This is not specifically limited in this application. Compared with a conventional 5G architecture, the communication system 100A newly adds the data management core network device 170 to manage authentication information of the access network device. It should be understood that the term "data management core network device" is merely used as an example, and is not intended to constitute a limitation. The device may alternatively be described by using another term. The data management core network device may alternatively be deployed on an existing device in 5G or another communication system as a functional module having a function of managing authentication information of the access network device. In addition, although not shown, in comparison with the conventional 5G architecture, a functional module used to initiate a session establishment request is newly added to the access network device 110 in the communication system 100A. The session establishment request is used to request to establish a session between the access network device 110 and the user plane function 120.

Although only one device is shown in FIG. 1A, in an implementation, any proper quantity of devices may be included based on a scale and an architecture of a network. For example, a plurality of UPFs 120 may be included, each data flow is sent by a same terminal device or different terminal devices, and the SMF 140 selects one or more UPFs 120 for the terminal device. In another example, a plurality of access network devices 110 may be included, each data flow is sent by a same access network device or different access network devices, and the SMF 140 selects one or more UPFs 120 for the access network device.

In the example shown in FIG. 1A, the communication system 100A may include:

### 1. (Radio) access network (radio access network, (R)AN) device 110

The (R)AN can manage radio resources, provide an access service for the terminal device, and complete forwarding of data of the terminal device between the terminal device and a core network. The (R)AN may also be understood as a base station. For details, refer to the foregoing descriptions.

### 2. UPF 120

The UPF is used as an interface to a data network, and implements functions such as user plane data forwarding, session/flow level-based charging statistics collection, and bandwidth limitation. The UPF is used for almost all user plane functions, including packet routing and forwarding, policy enforcement, traffic reporting, quality of service (quality of service, QoS) processing of user plane data, and the like. Main functions of the UPF include: an anchor for intra-/inter-system mobility; an external PDU session point connected to a data network; packet routing and forwarding; a user plane part of policy rule enforcement and data packet inspection; traffic usage reporting; support of an uplink classifier to route traffic flows to a data network; support of a branching point to support a multi-homed PDU session; QoS handling for a user plane, for example, packet filtering, gating control, and UL/DL rate enforcement; uplink traffic verification (service data flow (service data flow, SDF) to QoS flow mapping); and downlink packet buffering and downlink data notification triggering.

### 3. AMF 130.

The AMF is used to perform functions such as mobility management, or access authentication/authorization. In addition, the AMF is further used for transferring a user policy between the terminal device and the policy control function. In addition, the AMF may receive non-access stratum (non-access stratum, NAS) signaling (including mobility management (mobility management, MM) signaling and session management (session management, SM) signaling) of the terminal device and related signaling of the access network device (for example, next generation (next generation, NG) 2 interface signaling, of a base station granularity, exchanged with the AMF), to complete a user registration procedure, SM signaling forwarding, and mobility management.

### 4. SMF 140.

The SMF is used for session management, allocation and management of an internet protocol (internet protocol, IP) address of the terminal device, selection of a termination point that can manage a user plane function and a policy control and charging function interface, downlink data notification, and the like. The SMF may be further configured to complete procedures such as establishment, release, and update related to a PDU session.

### 5. DC 150.

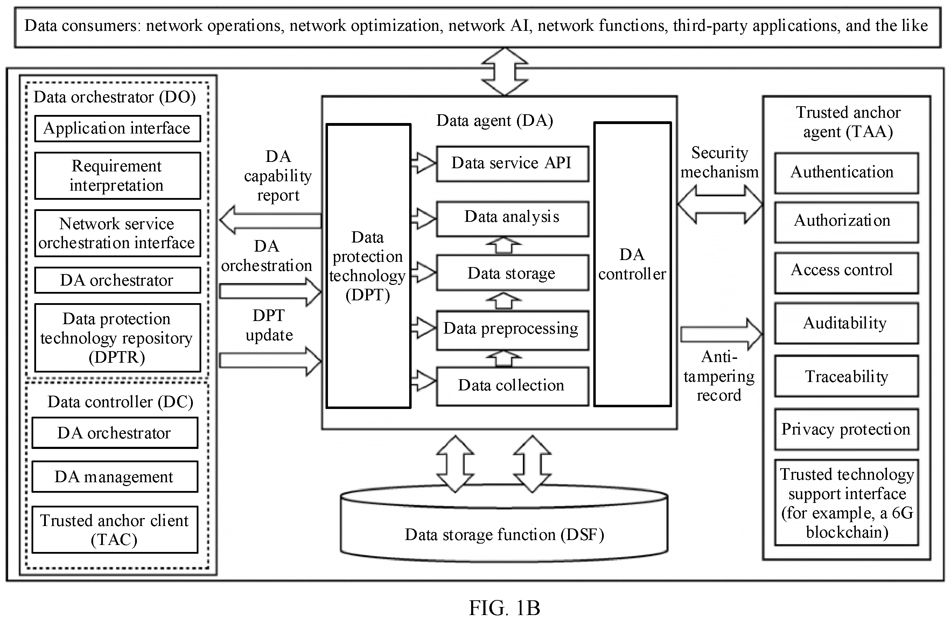

The DC is used for fine-grained real-time data orchestration. The DC and a data orchestrator (data orchestrator, DO) collaborate to implement a flexible and programmable data pipeline. For details, refer to the description of the 6G data plane function architecture in FIG. 1B.

### 6. PCF 160.

The PCF is used for user policy management, including a mobility-related policy and a PDU session-related policy, for example, a QoS policy and a charging policy.

### 7. Data management core network device 170.

The data management core network device 170 is configured to manage authentication information (for example, subscription data) of the access network device. In addition, the data management core network device 170 may be further configured to manage QoS information of a session of the access network device.

### 8. Application function (application function, AF) 180.

The AF includes the following functions: interacting with a 3GPP core network to provide a service or a service, including interacting with a network exposure function (network element function, NEF) network element, interacting with a policy architecture, and the like.

### 9. Data processor function (data processor function, DPF) 190.

The DPF is configured to: implement a data processing function, provide trusted high-quality data for an intelligent and automatic decision-making algorithm, and store processed data or forward the processed data to a next node. The UPF routes the data to the DPF through a network interface.

It may be understood that the communication system 100A may further include another device that is not shown. For example, the communication system 100A may further include unified data management (unified data management, UDM). The UDM includes the following functions: unified data management, support for authentication credential processing in a 3GPP authentication and key agreement mechanism, user identity processing, access authorization, registration and mobility management, subscription management, short message management, and the like. The data management core network device 170 may be independently deployed in the core network or may be jointly deployed with the UDM. The communication system 100A may further include an authentication server function (authentication server function, AUSF) network element. The AUSF mainly includes the following functions: an authentication server function, interacting with the UDM to obtain registration user information, and performing an authentication-related function, for example, generating an intermediate key.

In the foregoing descriptions, the network elements may be network elements in a hardware device, software functions running on dedicated hardware, or virtualization functions instantiated on a platform (for example, a cloud platform). One or more services may be obtained through division into the foregoing function network elements. Further, there may be a service independent of a network function. An instance of the foregoing function network element, an instance of a service included in the foregoing function network element, or an instance of a service independent of a network function may be referred to as a service instance.

FIG. 1B is a diagram of a data plane function architecture of a 6G mobile communication network according to some embodiments of the present disclosure. As shown in FIG. 1B, the data plane architecture of the 6G mobile communication network mainly includes four parts of functions: a data orchestrator (data orchestrator, DO) (and a data controller (data controller, DC)), a data agent (data agent, DA), a trusted anchor agent (trusted anchor agent, TAA), and a data storage function (data storage function, DSF).

The DO supports a programmable data pipeline and converts a data service request (constructs a data pipeline based on the data service request). The DA may be built in a network function or deployed independently to perform data collection, data preprocessing, data storage, data analysis, data sharing, and other data services orchestrated in the data pipeline. The TAA is an independent component defined in the data plane architecture to ensure 6G data reliability. During data processing and use, regulatory requirements of regulations such as PIPL/GDPR need to be complied with. If data is subject to various security and privacy attacks from both internal and external network entities, serious risks may occur. Therefore, the TAA plays an important role in protecting data confidentiality, integrity, and reliability in the 6G network. The DSF functions as a storage extension component of the DA when large-scale data storage or long-term data storage is required.

Based on a real-time requirement and a cross-domain condition of a task, the data orchestrator is classified into two types: a DO and a DC. The DO is used for coarse-grained and non-real-time data orchestration, and the DC is used for a fine-grained and real-time orchestration task. The DO and the DC may collaborate to implement a flexible and programmable data pipeline. The DO mainly provides the following functions: First, the DO is a portal for receiving a data service request and converting the data service request into a combined request for a data pipeline. In addition, the DO collaborates with other network services. For example, a computing power network service orchestrates computing power, and the DO orchestrates data.

Based on the data service request and a service capability of the DA, the DO may implement cross-domain coarse-grained data pipeline orchestration. In addition, the DO may have a built-in data security protection and privacy protection technology repository (data protection technology repository, DPTR), including technologies such as differential privacy, homomorphic encryption, secure multi-party computing, and zero-knowledge proof, to provide a data security and privacy protection capability and empower a data protection technology (data protection technology, DPT) to the DA as required.

On the contrary, the DC may implement fine-grained DA orchestration. In a local domain, data pipelines are combined based on the DA capabilities and the data service request to implement real-time efficient service management. Second, the DC receives a DA capability report, registers and deregisters the DA, and monitors the DA in real time by monitoring a DA heartbeat. In addition, the DC may have a built-in trusted anchor client (trusted anchor client, TAC), to initiate security mechanism requests such as authentication, authorization, and access control to the TAA, and apply for source tracing and audit services for data access. The DC may be deployed on a RAN side and a CN side.

The DA is optionally deployed on each network function (network function, NF), RAN, transport network (transport network, TN) node terminal, and OAM, while also supporting independent deployment, and establishes dynamic data pipelines (pipelines) including a series of data processing units arranged as required and in sequence, where an output of a previous unit is an input for a next unit. In this way, a data flow that covers data collection, preprocessing, storage, and application/analysis, all of which can be output from the DA as required, is formed, while providing external interfaces for data access services.

The data collection refers to obtaining data from a data source in subscription/notification or request/response manner. A data obtaining request indicates a trigger manner, a trigger condition, a reporting periodicity, a data amount of data reporting, and the like. Collection of user data, network data, AI data, and IoT data is supported. Streaming data collection, batch data collection, and real-time and non-real-time data collection are supported.

The data preprocessing refers to a series of operations performed on collected raw data, such as "cleaning, filling, smoothing, merging, normalization, and consistency check", to improve data quality and lay a foundation for subsequent analysis. The raw data usually includes dirty data, such as a data loss, data noise, data redundancy, and data set imbalance.

Data privacy protection means using technologies such as k-anonymity (k-anonymity), l-diversity (l-diversity), t-closeness, and ε-differential privacy (differential privacy) to process collected data. In this way, malicious attackers cannot directly obtain sensitive information from anonymized data, thereby protecting confidentiality and privacy. The data protection technology may be pre-installed in the DA or pushed by the DO as required to protect data security and privacy at each layer of the DA.

The data analysis function is loosely coupled with the DA and may be deployed separately from the DA as required. Various data analysis technologies, such as AI/ML, Hive, and Spark, are supported. The data analysis function invokes data services at levels such as data collection, preprocessing, and storage of the DA through an API. A required AI model can be pre-installed or pushed by a network service (network service).

The TAA is an agent of a 6G trusted plane on the data plane, includes trusted functions such as authentication, authorization, access control, audit, and source tracing, and also provides an interface for supporting trusted technologies such as a blockchain to protect confidentiality, integrity, and reliability of all data.

The data storage function (data service function, DSF) is used for data storage, and information such as AI model data, KPIs, logs, and alarms can be stored in the DSF. The DSF supports unified storage for structured/unstructured/semi-structured data, and supports dynamic classification and multi-layer storage of various types of files. The DSF employs the following diverse data storage technologies: A form of the DSF may be a centralized database or a distributed database like a distributed Hash table (distributed Hash table, DHT) or an interplanetary file system (interplanetary file system, IPFS). The DSF supports a plurality of data storage and encryption technologies such as database appearance encryption, transparent data encryption (transparent data encryption, TDE), transparent file encryption (transparent file encryption, TFE), user-defined function (user-defined function, UDF) encryption, and full disk encryption (full disk encryption, FDE).

It should be understood that the communication system 100A in FIG. 1A is applicable to various scenarios. For example, the application scenario of the communication system 100A includes but is not limited to a 6G system. This is not limited in embodiments of this application. It should also be understood that the foregoing communication system may comply with any appropriate communication technology and a corresponding communication standard. In addition, the device names in FIG. 1A are merely an example and not intended for limitations. In a future communication architecture, the corresponding device may be implemented as a device having a same function. In other words, names of the network elements shown in FIG. 1A are merely names, and the names do not constitute a limitation on functions of the network elements. In a 6G network and other networks in the future, the network elements may alternatively have other names. This is not specifically limited in embodiments of this application. For example, in the 6G network, some or all of the foregoing network elements may still use terms in 5G, or may have other names. A general description is provided herein. Details are not described again below. In addition, the "network element" in this specification may also be referred to as a network function instance (network function instance), an NF, a device, an apparatus, a module, or the like. This is not particularly limited in this application. In addition, the foregoing names are defined only for ease of distinguishing between different functions, and should not constitute any limitation. This application does not exclude a possibility that another name is used in the 5G network and another future network. For example, in the 6G network, some or all of the foregoing networks may still use terms in 5G, or may use other names. Names of the interfaces between the network elements are merely examples, and the names of the interfaces may be other names in a specific implementation. This is not specifically limited in this application. In addition, names of messages (or signaling) transmitted between the foregoing network elements are also merely examples, and do not constitute any limitation on functions of the messages.

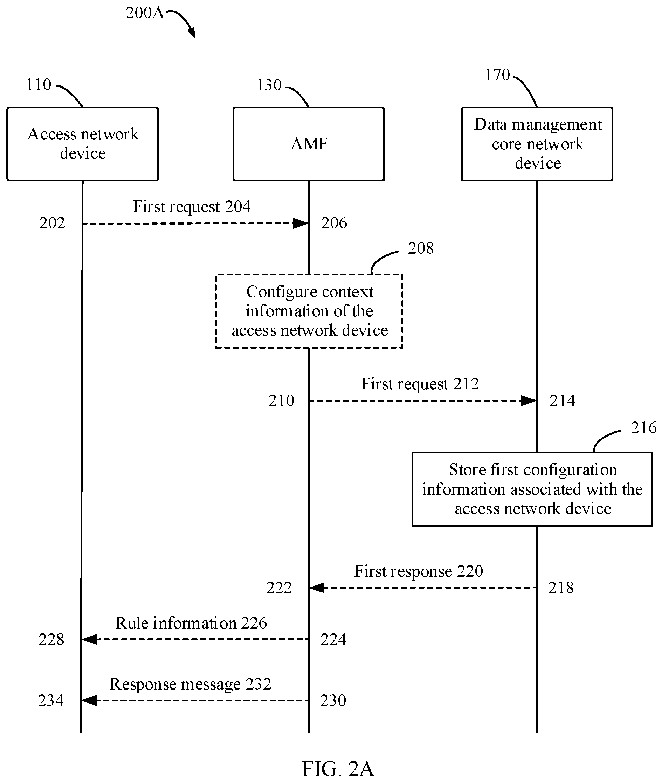

FIG. 2A is a diagram of signaling interaction in a method 200A for registering the access network device 110 according to some embodiments of the present disclosure. For a purpose of illustration, FIG. 2A is described with reference to FIG. 1A. The method 200A may involve the access network device 110, the AMF 130, and the data management core network device 170. It should be understood that the method 200A may further include additional blocks that are not shown and/or some of the shown blocks may be omitted. The scope of the present disclosure is not limited thereto. The method 200A is applicable to the communication system 100A in FIG. 1A, and is further applicable to another communication system. It should be understood that an execution sequence of the steps of the method shown in FIG. 2A is an example, and the steps do not need to be performed in the sequence. An execution sequence between different steps may be changed.

As shown in FIG. 2A, the data management core network device 170 receives a first request 212 in 214. The first request 212 includes identification information of the access network device 110. The first request is used to request to register the access network device 110, to support a dialog between the access network device 110 and the UPF 120. For example, the first request may be a registration request message. The data management core network device 170 stores first configuration information associated with the access network device 110 in 216, where the first configuration information is used to support the session between the access network device 110 and the UPF 120. For example, the first configuration information includes authentication information of the access network device 110 (for example, subscription data of the access network device 110). Further, the first configuration information may further include at least one of the following information: capability information of the access network device 110, initialization policy information of the access network device 110, and QoS information of the session of the access network device 110.

In some embodiments, the data management core network device 170 may receive the first request 212 from the AMF 130. For example, the AMF 130 may receive the first request 204 from the access network device 110 in 206, and configure context information of the access network device 110 based on the first request 204 in 208. For example, the context information may include at least one of the following information: location information of the access network device 110, permission information of the access network device 110, and IP address information of the access network device 110. The AMF 130 forwards the first request 212 to the data management core network device 170 in 210. The data management core network device 170 may perform initialization configuration (for example, generate and store the first configuration information) for the access network device 110 based on the first request 212, to facilitate authentication on the access network device 110 and subscription data obtaining in subsequent communication, and send, to the AMF 130, a response message 220 corresponding to the first request 212 in 218. For example, the response message 220 may be a registration response message. The AMF 130 may receive the response message 220 from the data management core network device 170 in 222. The AMF 130 may send, to the access network device 110, rule information 226 used to establish the session in 224, and send, to the access network device 110, a response message 232 corresponding to the first request 204 in 230. For example, the rule information may be included in a rule configuration message. For example, the rule information 226 may include at least one of the following information: a QoS rule used for AI data communication, a QoS rule used for sensing data communication, and a QoS rule used for IoT data communication. The rule information 226 may include different QoS rules for different types of data. The access network device 110 may receive, from the AMF 130, the rule information 226 used to establish the session in 228, and receive the response message 232 from the AMF 130 in 234. In this way, a registration process of the access network device can be completed with low signaling overheads, so that the access network device triggers a session establishment process.

In some implementations, the method 200A may further involve the PCF 160 (not shown in FIG. 2A) in FIG. 1A. For example, the data management core network device 170 may send, to the PCF 160 based on the stored first configuration information associated with the access network device 110, a second request. The second request is used to request to update the rule information associated with the access network device 110. For example, the second request is a rule information update request message. The PCF 160 may update, based on the second request, the rule information used to establish the session, for example, a policy used to establish the session between the access network device 110 and the UPF 120. Before sending, to the access network device 110, the rule information 226 used to establish the session in 224, the AMF 130 may send a third request to the PCF 160. The third request is used to request the rule information associated with the access network device 110. For example, the third request is a rule information request message. The PCF 160 may send, to the AMF 130 in response to the third request, the stored rule information used to establish the session. The AMF 130 may receive the rule information from the PCF 160, and forward the rule information to the access network device 110.

In some embodiments, the method 200A may further involve an operation, administration and maintenance OAM device (not shown in FIG. 1A and FIG. 2A). For example, the data management core network device 170 may receive the first request from the OAM device, where the first request may include the identification information of the access network device 110. The first request is used to request to register the access network device 110, to support the dialog between the access network device 110 and the UPF 120. For example, the first request may be a registration request message. The data management core network device 170 may perform initialization configuration (for example, generate and store the first configuration information) for the access network device 110 based on the first request from the OAM device, and send a fourth request to the AMF 130. The fourth request is used to request to configure the context information of the access network device 110. For example, the fourth request may be a context configuration request message. The AMF 130 may configure the context information of the access network device 110 based on the fourth request received from the data management core network device 170, and send, to the data management core network device 170, a response message corresponding to the fourth request.

Similarly, the data management core network device 170 may send, to the PCF 160 based on the stored first configuration information associated with the access network device 110, the second request associated with the access network device 110. The PCF 160 may update, based on the second request, the rule information used to establish the session. After completing configuration of the context information of the access network device 110, the AMF 130 may send, to the PCF 160, the third request associated with the access network device 110. In response to the third request, the PCF 160 sends, to the AMF 130, the stored rule information used to establish the session. The AMF 130 may receive the rule information from the PCF 160, and forward the rule information to the access network device 110.

In some embodiments, a deregistration procedure for the access network device may be further performed. For example, the access network device 110 may send a fifth request to the AMF 130, where the fifth request is used to request to deregister the access network device 110. For example, the fifth request may be a deregistration request message. The fifth request may include the identification information of the access network device 110. The AMF 130 may forward the fifth request to the data management core network device 170 based on the received fifth request, where the fifth request includes the identification information of the access network device 110. The data management core network device 170 may release, based on the received fifth request, the first configuration information associated with the access network device 110, and send, to the AMF 130, a response message corresponding to the received fifth request. In some embodiments, the AMF 130 may further send a sixth request to the PCF 160. The sixth request is used to request to delete or release the rule information of the session between the access network device 110 and the UPF 120. For example, the sixth request is a rule information release request message or a rule information deletion request message. The PCF 160 may delete or release, based on the sixth request, the rule information used to establish the session, and send, to the AMF 130, a response message corresponding to the sixth request. The AMF 130 may send, to the access network device 110, a response message corresponding to the received fifth request, and release the context information of the access network device 110.

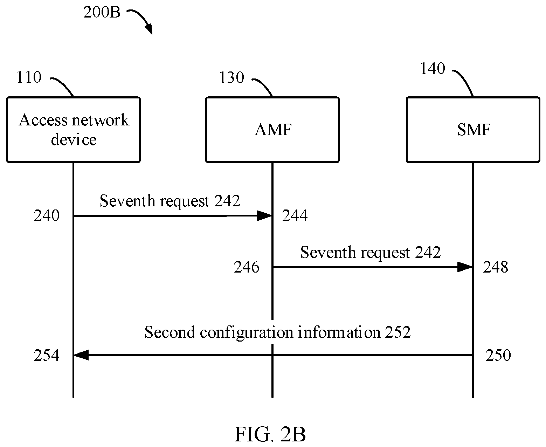

FIG. 2B is a diagram of signaling interaction in a method 200B for establishing a session according to some embodiments of the present disclosure. For a purpose of illustration, FIG. 2B is described with reference to FIG. 1A. The method 200B may involve the access network device 110, the AMF 130, and the SMF 140. It should be understood that the method 200B may further include additional blocks that are not shown and/or some of the shown blocks may be omitted. The scope of the present disclosure is not limited thereto.

As shown in FIG. 2B, the access network device 110 sends a seventh request 242 to the AMF 130 in 240. The seventh request 242 is used to establish a session between the access network device 110 and the UPF 120 (not shown in FIG. 2B). For example, the seventh request 242 is a session establishment request message. The seventh request 242 includes identification information of the access network device 110. In some embodiments, the seventh request 242 may be sent through an N2 interface between the access network device 110 and the AMF 130.

The AMF 130 receives the seventh request 242 from the access network device 110 in 244, and forwards the seventh request 242 to the SMF 140 in 246. The SMF 140 receives the seventh request 242 from the AMF 130 in 248, and sends second configuration information 252 to the access network device 110 through the AMF 130 in 250. The access network device 110 receives, from the SMF 140 through the AMF 130, the second configuration information 252 used to establish the session in 254. The second configuration information 252 is used to support the session between the access network device 110 and the UPF 120. The second configuration information 252 may include configuration information for an uplink channel from the access network device 110 to the UPF 120, for example, a tunnel endpoint identifier and/or a tunnel identifier from the access network device 110 to the UPF 120. For example, the second configuration information 252 may include N2 session management (session management, SM) information (similar to N2 SM information described in clause 4.3.2.2.1 of 3GPP TS 23.502). In some embodiments, the access network device 110 may receive the second configuration information 252 through the N2 interface.

In some embodiments, the seventh request sent by the access network device 110 to the AMF 130 may further include indication information of a device that initiates the seventh request. For example, the indication may include an indication of a device type. For example, the device that initiates the seventh request may be an access network device or a terminal device. If the device that initiates the seventh request is a terminal device, the seventh request is used to request to establish a PDU session between the terminal device and the UPF 120. If the device that initiates the seventh request is an access network device, the seventh request is used to request to establish the session between the access network device and the UPF 120. In the method 200B, the device that initiates the seventh request 242 is the access network device 110.

In some embodiments, the seventh request sent by the access network device 110 to the AMF 130 may further include identification information of a data service task associated with the seventh request.

In some embodiments, the seventh request 242 may further include identification information of a data service task associated with the seventh request, and the identification information may include an indication of information (for example, a type) of the device that initiates the seventh request. In other words, the seventh request 242 may include information related to the seventh request, for example, indication information of a data service task and indication information of the device that initiates the request.

When the device that initiates the seventh request is an access network device, for example, when the access network device 110 generates and sends sensing data, the SMF 140 may send an eighth request associated with the access network device 110 to the data management core network device 170 (not shown in FIG. 2B). The eighth request is used to request authentication information (for example, subscription data) associated with the access network device. For example, the eighth request is an authentication information request message or a subscription data request message. Based on the eighth request, the data management core network device 170 may send authentication information (for example, subscription data) associated with the access network device 110 to the SMF 140. In this way, the SMF 140 may complete authentication on the access network device that initiates the seventh request 242.

In some embodiments, the SMF 140 may further send third configuration information to the UPF 120. The third configuration information is used to support the session between the access network device 110 and the UPF 120. The third configuration information may include configuration information for a downlink channel from the UPF 120 to the access network device 110, for example, a tunnel endpoint identifier and/or a tunnel identifier from the UPF 120 to the access network device 110. Therefore, a data path between the access network device 110 and the UPF 120 may be established, and a data radio bearer (data radio bearer, DRB) between the terminal device and the access network device does not need to be established. When the access network device 110 generates to-be-transmitted data, the access network device 110 may send the to-be-transmitted data to the UPF 120 through the data path.

In some embodiments, a release procedure for the session between the access network device and the UPF may be further performed. The access network device 110 may send a ninth request to the AMF 130, where the ninth request is used to request to release the session between the access network device and the UPF. For example, the ninth request may be a session release request message. In the context of the present disclosure, "release" and "delete" may be used interchangeably. For example, the ninth request may be used to request to delete the session between the access network device and the UPF. For example, the ninth request may be a session deletion request message. The ninth request may include identification information of the session between the access network device and the UPF. The AMF 130 may receive the ninth request from the access network device 110, and send the ninth request to the SMF 140. Based on the received ninth request, the SMF 140 may send a tenth request to the UPF 120, where the tenth request is used to request to release the session between the access network device and the UPF. For example, the tenth request is a session release request message. In some embodiments, based on receiving the tenth request, the UPF 120 may release the session, and send, to the SMF 140, a response message corresponding to the tenth request. The SMF 140 may send, to the access network device 110, a response message corresponding to the ninth request. The response message is used to confirm session release, and release context information associated with the session. In this way, the session between the access network device and the UPF can be released, thereby implementing life cycle management of the session initiated by the access network device.

It may be understood that one or more embodiments of the method 200A and the method 200B may be implemented separately or in combination, and are all within the scope of the present disclosure. According to some embodiments of the present disclosure, a data service scenario in which data generated by an access network device side cannot be supported by a conventional PDU session mechanism can be resolved. According to some embodiments of the present disclosure, a session between an access network device and a UPF may be established, and a QoS policy and a charging policy in a conventional PDU session may be used for the session. According to some embodiments of the present disclosure, bearing of new data of a communication network can be supported, for example, sensing data on a base station side and AI data on a base station side.

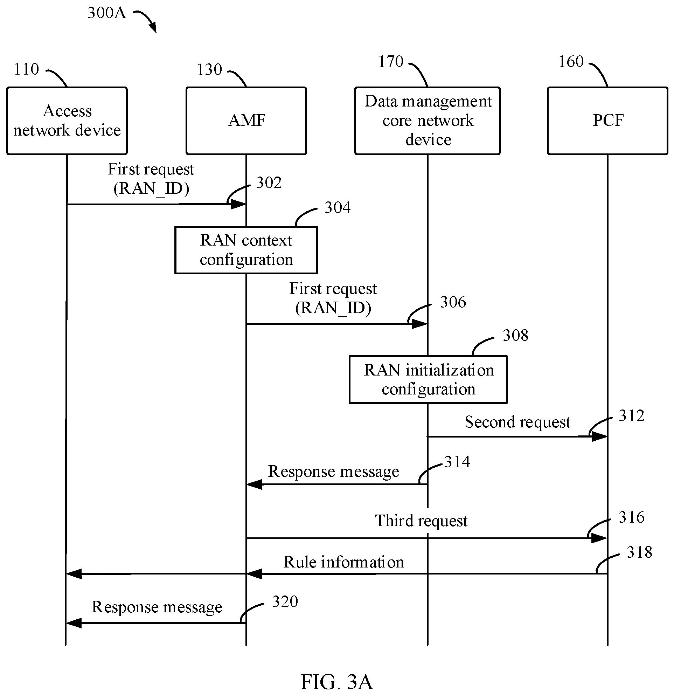

FIG. 3A is a diagram of signaling interaction in an example implementation of a method 300A for registering an access network device according to some embodiments of the present disclosure. For a purpose of illustration, FIG. 3A is described with reference to FIG. 1A. The method 300A may involve the access network device 110, the AMF 130, the data management core network device 170, and the PCF 160. It should be understood that the method 300A may further include additional blocks that are not shown and/or some of the shown blocks may be omitted. The scope of the present disclosure is not limited thereto.

As shown in FIG. 3A, the access network device 110 may send 302, to the AMF 130, a first request used to request to register the access network device 110, where the first request carries identification information (for example, a RAN_ID) of the access network device 110. For example, the first request is a registration request message. After receiving the first request, the AMF 130 may configure 304 context information corresponding to the access network device 110. The AMF 130 further forwards the first request to the data management core network device 170 in 306. After receiving the first request, the data management core network device 170 may perform initialization configuration for the access network device 110 in 308, store authentication information of the access network device 110, and send a second request to the PCF 160 in 312, where the second request is used to request the PCF 160 to update rule information associated with the access network device 110. For example, the second request is a rule information update request message. The data management core network device 170 may send a response message to the AMF 130 in 314. For example, the response message may be a registration response message.

In some embodiments, the AMF 130 may send a third request to the PCF 160 in 316. The third request is used to request the rule information associated with the access network device 110. For example, the third request may be a rule information request message or a policy configuration request message. In response to the third request, the PCF 160 may deliver the rule information associated with the access network device 110 in 318, to send the rule information to the access network device 110 through the AMF 130. The AMF 130 may send a response message to the access network device 110 in 320. In this way, a registration process of the access network device can be implemented with low signaling overheads.

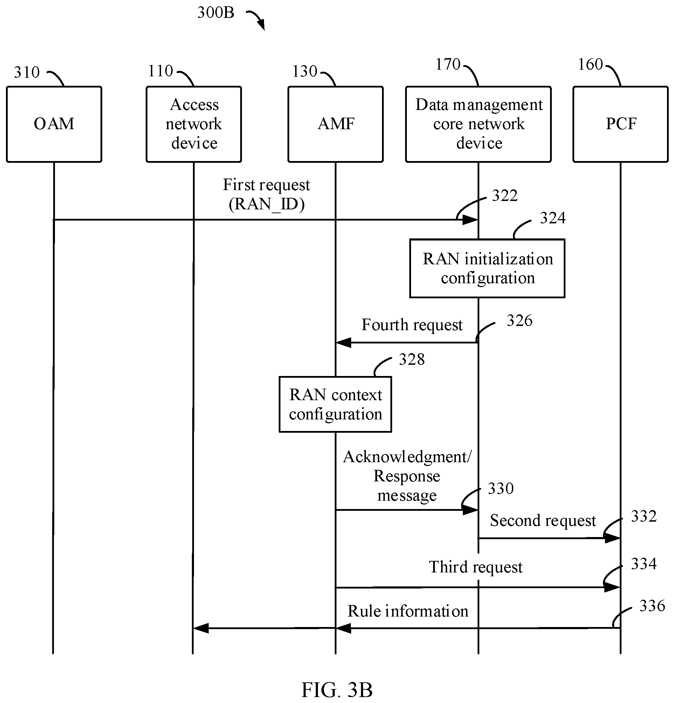

FIG. 3B is a diagram of signaling interaction in another example implementation of a method 300A for registering an access network device according to some embodiments of the present disclosure. FIG. 3B is described with reference to FIG. 1A. The method 300B may involve the access network device 110, the AMF 130, the data management core network device 170, the PCF 160, and an OAM 310. It should be understood that the method 300B may further include additional blocks that are not shown and/or some of the shown blocks may be omitted. The scope of the present disclosure is not limited thereto.

As shown in FIG. 3B, the OAM 310 may send, to the data management core network device 170, a first request used to request to register the access network device 110 in 322, where the first request carries identification information (for example, a RAN_ID) of the access network device 110. After receiving the first request, the data management core network device 170 may perform initialization configuration for the access network device 110 in 324. The data management core network device 170 may further send a fourth request to the AMF 130, where the fourth request is used to request the AMF 130 to configure context information of the access network device 110. For example, the fourth request may be a context configuration message. The AMF 130 may configure the context information corresponding to the access network device 110 in 328, and send, to the data management core network device 170, a response message corresponding to the fourth request in 330.

In some embodiments, the data management core network device 170 may send a second request to the PCF 160 in 332, where the second request is used to request the PCF 160 to update the rule information associated with the access network device 110. For example, the second request is a rule information update request message. The AMF 130 may send a third request to the PCF 160 in 334. The third request is used to request the rule information associated with the access network device 110. For example, the third request is a rule information request message. In response to the third request, the PCF 160 may deliver the rule information associated with the access network device 110 in 336, to send the rule information to the access network device 110 through the AMF 130. In this way, a registration process of the access network device initiated by the OAM can be implemented with low signaling overheads.

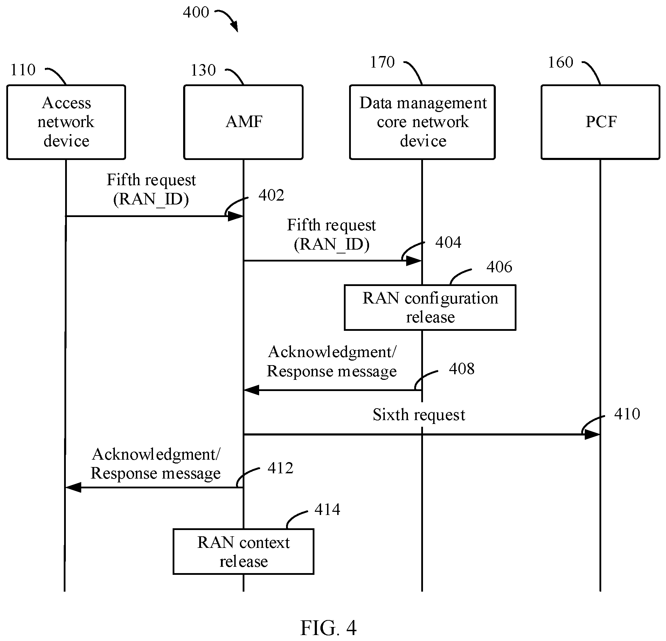

FIG. 4 is a diagram of signaling interaction in an example implementation of a method 400 for deregistering an access network device according to some embodiments of the present disclosure. For a purpose of illustration, FIG. 4 is described with reference to FIG. 1A. The method 400 may involve the access network device 110, the AMF 130, the data management core network device 170, and the PCF 160. It should be understood that the method 400 may further include additional blocks that are not shown and/or some of the shown blocks may be omitted. The scope of the present disclosure is not limited thereto.

As shown in FIG. 4, the access network device 110 may send a fifth request to the AMF 130 in 402, where the fifth request is used to request to deregister the access network device 110. For example, the fifth request may be a deregistration request message. The fifth request may carry identification information (for example, a RAN_ID) of the access network device 110. After receiving the fifth request, the AMF 130 forwards the fifth request to the data management core network device 170 in 404. After receiving the fifth request, the data management core network device 170 may search a database of the data management core network device 170, and release configuration associated with the access network device 110 in 406. For example, the data management core network device 170 may delete data corresponding to the RAN_ID, and send, to the AMF 130, a response message corresponding to the received fifth request in 408.

In some embodiments, the access network device 110 may send a sixth request to the PCF 160 in 410. The sixth request is used to request to delete or release rule information associated with the access network device 110. For example, the sixth request is a rule information release request message or a rule information deletion request message. After receiving the sixth request, the PCF 160 may release or delete the rule information associated with the access network device 110. The AMF 130 may send, to the access network device 110, a response message corresponding to the sixth request in 412, and release stored context information of the access network device 110 in 414. In this way, a deregistration process of the access network device can be implemented with low signaling overheads.

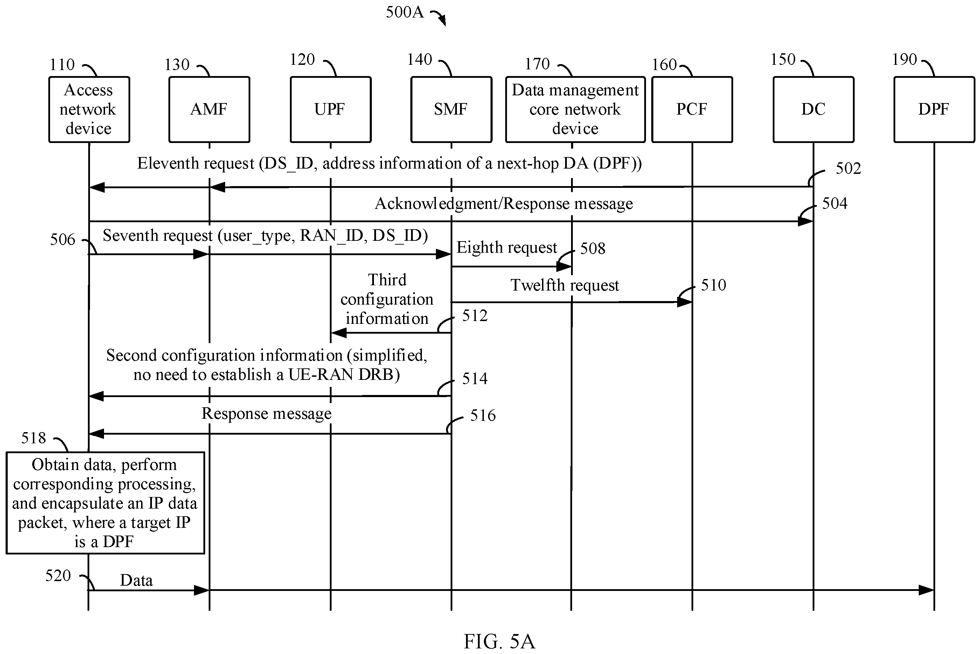

FIG. 5A is a diagram of signaling interaction in an example implementation of a method 500A for establishing a session according to some embodiments of the present disclosure. For a purpose of illustration, FIG. 5A is described with reference to FIG. 1A, and the method 500A may involve the access network device 110, the AMF 130, the UPF 120, the SMF 140, the data management core network device 170, the PCF 160, the DC 150, and the DPF 190. It should be understood that the method 500A may further include additional blocks that are not shown and/or some of the shown blocks may be omitted. The scope of the present disclosure is not limited thereto.

As shown in FIG. 5A, the DC 150 may send an eleventh request to the access network device 110 in 502, where the eleventh request is used to request to start a data service, and the eleventh request may carry identification information (for example, a DS_ID) of a data service task (data service task) and address information of a next-hop DPF 190. The access network device 110 may send, to the DC 150, a response message corresponding to the eleventh request in 504, and send a seventh request to the SMF 140 in 506. The seventh request is used to request to establish a session between the access network device 110 and the UPF 120. For example, the seventh request is a session establishment request message. In some embodiments, the seventh request may carry at least one of the following: indication information (for example, an indication of a device type, device_type) of a device that initiates the seventh request, identification information (for example, a RAN_ID) of the device that initiates the seventh request, and identification information (for example, a DS_ID) of a data service task.

After receiving the seventh request, the SMF 140 may obtain, based on the device_type, subscription data of the device that initiates the seventh request from the data management core network device 170 or the UDM. If the device_type indicates that the device that initiates the seventh request is a terminal device, the SMF 140 may obtain subscription data of the terminal device from the UDM. In the method 500A, the device_type indicates that the device that initiates the seventh request is the access network device. Therefore, the SMF 140 may obtain subscription data of the access network device from the data management core network device 170.

The SMF 140 may send, based on the RAN_ID, an eighth request associated with the access network device 110 to the data management core network device 170 in 508. The eighth request is used to request the subscription data associated with the access network device. For example, the eighth request is a subscription data request message. In response to the eighth request, the data management core network device 170 may send the subscription data of the access network device 110 to the SMF 140. Therefore, the SMF 140 may complete authentication on the device that initiates the seventh request. The SMF 140 may send a twelfth request associated with the access network device 110 in 510 to the PCF 160. The twelfth request is used to request rule information associated with the access network device. In response to the twelfth request, the PCF 160 may send the stored rule information associated with the access network device to the SMF 140. Therefore, the SMF 140 may obtain a policy rule (for example, a charging rule or a QoS rule) used for the access network device 110. Then, the SMF 140 may send, to the UPF 120, third configuration information 512 used to establish the session, and send, to the access network device 110, second configuration information 514 used to establish the session. The second configuration information and the third configuration information are used to support the session between the access network device 110 and the UPF 120. The second configuration information may include configuration information for an uplink channel from the access network device 110 to the UPF 120, for example, N2 SM information (similar to N2 SM information defined in clause 4.3.2.2.1 of TS 23.502). The third configuration information may include configuration information for a downlink channel from the UPF 120 to the access network device 110. Based on the second configuration information and the third configuration information, the access network device 110 and the UPF 120 may establish a data path (similar to a conventional PDU session), and do not need to establish a DRB between the terminal device and the access network device 110.

The SMF 140 may send, to the access network device 110 through the AMF 130, a response message corresponding to the seventh request, to indicate the access network device 110 to establish a data path between the access network device 110 and the UPF 120. After the data path between the access network device 110 and the UPF 120 is established, the access network device 110 may obtain data according to the eleventh request in 518, perform corresponding data processing, and encapsulate an IP data packet, where a target IP of data transmission is the DPF 190. The access network device 110 may send the data to the UPF 120 through the data path between the access network device 110 and the UPF 120 in 520, and then the UPF 120 sends the data to the DPF 190.

In this way, the access network device may initiate a request for establishing the session between the access network device and the UPF, and the SMF selects, based on identification information in the request, a core network device used for authentication. Therefore, data generated or processed by the access network device may be sent to the DPF through the UPF.

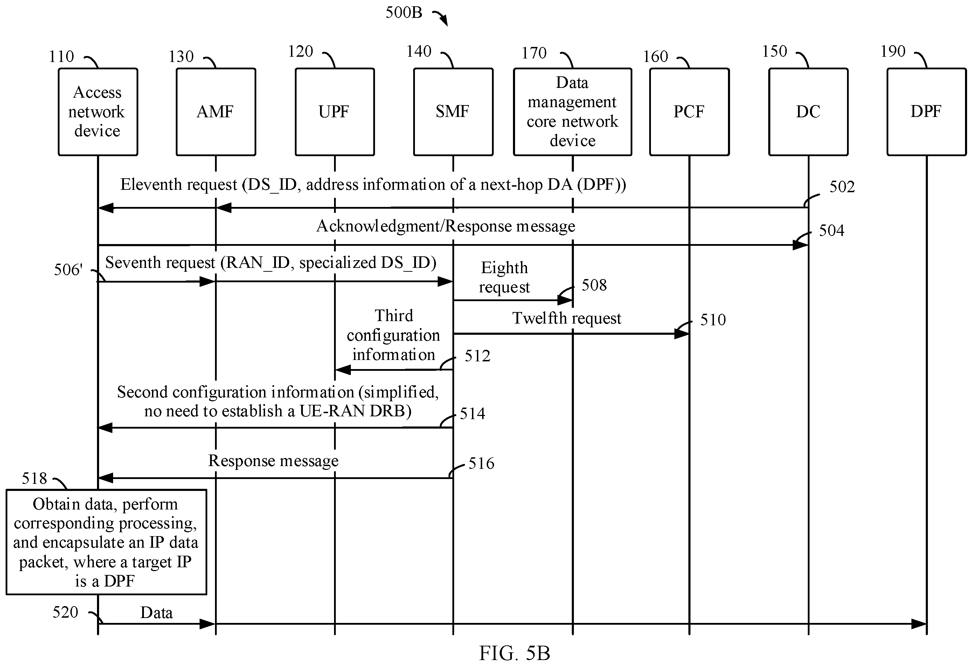

FIG. 5B is a diagram of signaling interaction in another example implementation of a method 500B for establishing a session according to some embodiments of the present disclosure. For a purpose of illustration, FIG. 5B is described with reference to FIG. 1A, and the method 500B may involve the access network device 110, the AMF 130, the UPF 120, the SMF 140, the data management core network device 170, the PCF 160, the DC 150, and the DPF 190. Same reference numerals indicate that steps or components described in FIG. 5B and steps or components described in FIG. 5A have same operations, and detailed descriptions thereof are omitted. It should be understood that the method 500B may further include additional blocks that are not shown and/or some of the shown blocks may be omitted. The scope of the present disclosure is not limited thereto.

In comparison with the method 500A, in the method 500B, the access network device 110 may send a seventh request to the SMF 140 through the AMF 130 in 506'. In some embodiments, the seventh request may carry identification information (for example, a RAN_ID) of a device that initiates the seventh request and identification information DS_ID of a specialized data service task. A special identifier is configured in the DS_ID received from the DC 150, and the specialized DS_ID may include an indication of information (for example, a type) of the device that initiates the seventh request. In this way, the SMF may determine, based on the specialized DS_ID, that the seventh request is initiated by the access network device, and obtain subscription data of the access network device from the data management core network device 170.

The SMF 140 may send, based on the RAN_ID, an eighth request associated with the access network device 110 to the data management core network device 170 in 508. The eighth request is used to request the subscription data associated with the access network device. For example, the eighth request is a subscription data request message. In response to the eighth request, the data management core network device 170 may send the subscription data of the access network device 110 to the SMF 140. Therefore, the SMF 140 may complete authentication on the device that initiates the seventh request.

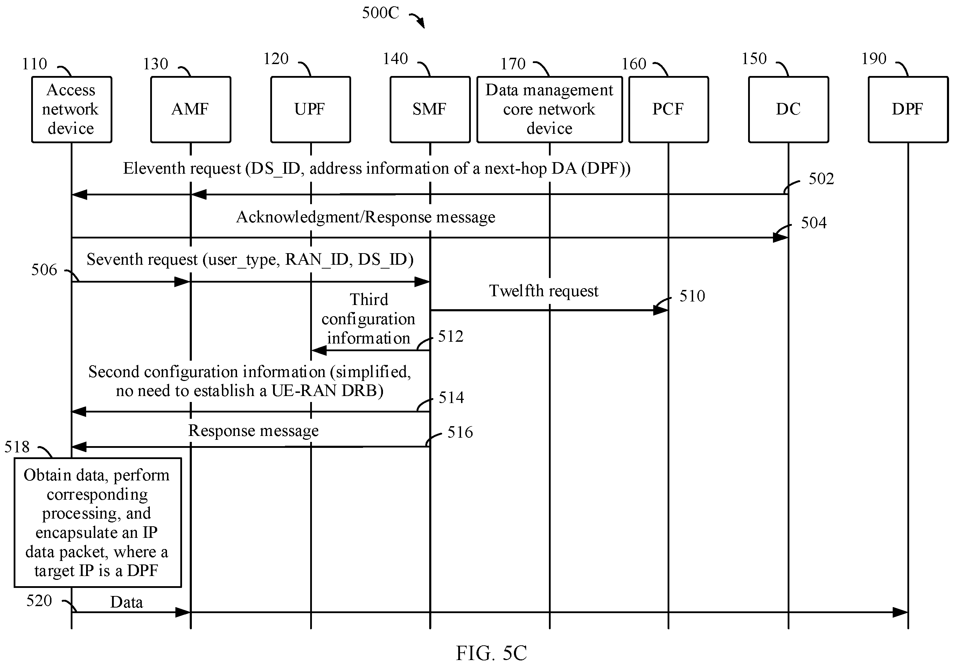

FIG. 5C is a diagram of signaling interaction in still another example implementation of a method 500C for establishing a session according to some embodiments of the present disclosure. For a purpose of illustration, FIG. 5C is described with reference to FIG. 1A, and the method 500C may involve the access network device 110, the AMF 130, the UPF 120, the SMF 140, the data management core network device 170, the PCF 160, the DC 150, and the DPF 190. Same reference numerals indicate that steps or components described in FIG. 5C and steps or components described in FIG. 5A have same operations, and detailed descriptions thereof are omitted. It should be understood that the method 500C may further include additional blocks that are not shown and/or some of the shown blocks may be omitted. The scope of the present disclosure is not limited thereto.

In comparison with the method 500A, in the method 500C, the SMF 140 does not need to select the data management core network device 170 to perform authentication on the access network device. Because the access network device 110 is a device of an operator, the SMF 140 can ensure trusted data transmission without performing authentication on the access network device 110 again. A policy such as QoS charging associated with the access network device 110 is stored in the PCF 160, and the SMF 140 may directly obtain, from the PCF 160 in response to receiving the seventh request, a policy rule used for the access network device 110 in 510. In this way, a session between the access network device and the UPF can be established with low signaling overheads, thereby reducing a communication delay.

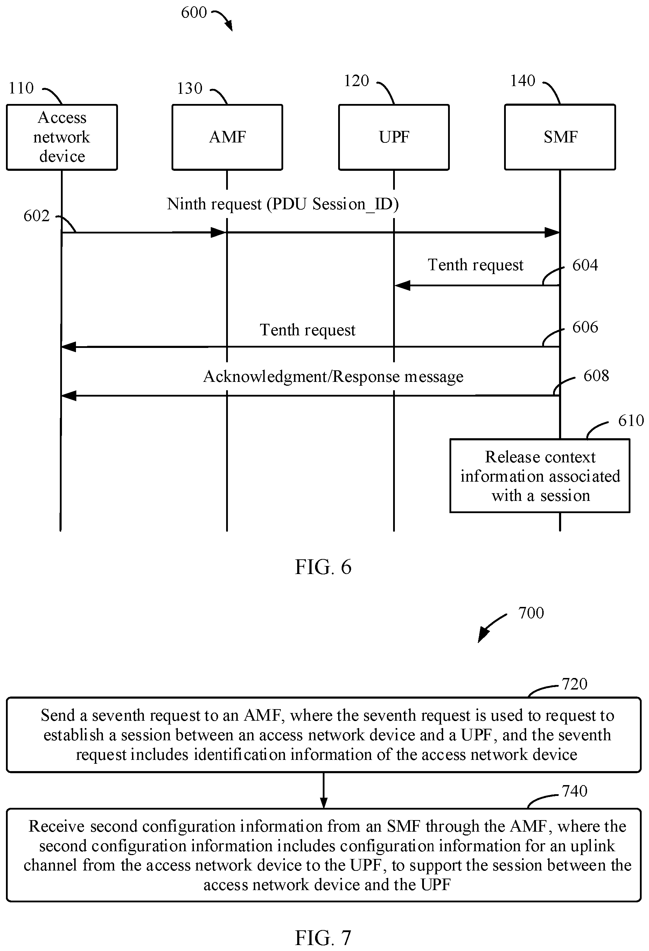

FIG. 6 is a diagram of signaling interaction in an example implementation of a method 600 for deleting a session according to some embodiments of the present disclosure. For a purpose of illustration, FIG. 6 is described with reference to FIG. 1A. The method 600 may involve the access network device 110, the AMF 130, the UPF 120, and the SMF 140. It should be understood that the method 600 may further include additional blocks that are not shown and/or some of the shown blocks may be omitted. The scope of the present disclosure is not limited thereto.

As shown in FIG. 6, the access network device 110 may send a ninth request to the SMF 140 through the AMF 130 in 602, where the ninth request is used to request to release a session between the access network device 110 and the UPF 120. For example, the ninth request may be a session deletion request. The ninth request may carry identification information (for example, a PDU Session ID) of the session.

After receiving the ninth request, the SMF 140 may send a tenth request to the UPF 120 and the access network device 110 in 604 and 606. The tenth request is used to request to release the session between the UPF 120 and the access network device 110. For example, the tenth request is a session release request message. In some embodiments, based on receiving the tenth request, the access network device 110 and the UPF 120 may release the session, and send, to the SMF 140, a response message corresponding to the tenth request. After successfully releasing the session between the UPF 120 and the access network device 110, the SMF 140 may send, to the access network device 110, a response message corresponding to the ninth request in 608, and then release context information associated with the session in 610. For example, the released context information may be session management context information.

FIG. 7 is a schematic flowchart of a method 700 implemented at an access network device according to some embodiments of the present disclosure. In a possible implementation, the method 700 may be implemented by the access network device 110 in the example communication system 100A. In another possible implementation, the method 700 may alternatively be implemented by another electronic apparatus independent of the example communication system 100A. For example, the following describes the method 700 by using an example in which the method 700 is implemented by the access network device 110 in the example communication system 100A.

In 720, the access network device 110 sends a seventh request to an access and mobility management function AMF, where the seventh request is used to request to establish a session between the access network device and a user plane function UPF, and the seventh request includes identification information of the access network device.

In 740, the access network device 110 receives second configuration information from a session management function SMF through the AMF, where the second configuration information includes configuration information for an uplink channel from the access network device to the UPF.

In some embodiments, the seventh request further includes at least one of the following: indication information of a device that initiates the seventh request; or identification information of a data service task associated with the seventh request.

In some embodiments, the seventh request further includes identification information of a data service task associated with the seventh request, and the identification information of the data service task includes indication information of a device that initiates the seventh request.

In some embodiments, the method may further include: sending a ninth request to the AMF, where the ninth request is used to request to release a session between the access network device and the UPF, and the ninth request includes identification information of the session; receiving a tenth request from the SMF through the AMF, where the tenth request is used to request to release the session between the access network device and the UPF; and receiving, from the SMF through the AMF, a response message corresponding to the ninth request.

In some embodiments, the method may further include: sending a first request to the AMF, where the first request is used to request to register the access network device, and the first request includes identification information of the access network device; receiving, from the AMF, rule information used to establish the session; and receiving, from the AMF, a response message corresponding to the first request.

In some embodiments, the method may further include: sending a fifth request to the AMF, where the fifth request is used to request to deregister the access network device, and the fifth request includes identification information of the access network device; and receiving, from the AMF, a response message corresponding to the fifth request.

In some embodiments, the seventh request is sent through an N2 interface, and the configuration information is received through the N2 interface.

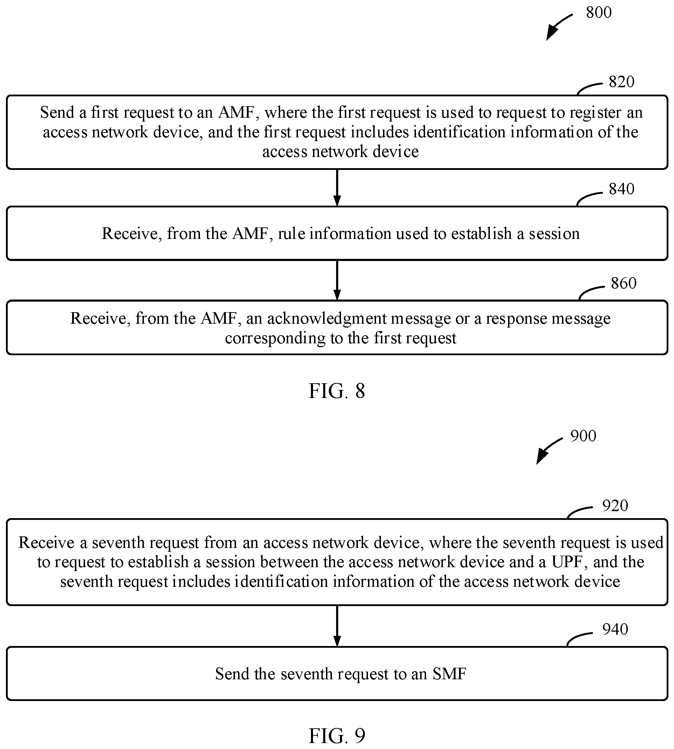

FIG. 8 is a schematic flowchart of another method 800 implemented at an access network device according to some embodiments of the present disclosure. In a possible implementation, the method 800 may be implemented by the access network device 110 in the example communication system 100A. In another possible implementation, the method 800 may alternatively be implemented by another electronic apparatus independent of the example communication system 100A. For example, the following describes the method 800 by using an example in which the method 800 is implemented by the access network device 110 in the example communication system 100A.

In 820, the access network device 110 sends a first request to an AMF, where the first request is used to request to register the access network device, and the first request includes identification information of the access network device.

In 840, the access network device 110 receives, from the AMF, rule information used to establish a session.

In 860, the access network device 110 receives, from the AMF, a response message corresponding to the first request.

In some embodiments, the method may further include: sending a fifth request to the AMF, where the fifth request is used to request to deregister the access network device, and the fifth request includes identification information of the access network device; and receiving, from the AMF, a response message corresponding to the fifth request.

FIG. 9 is a schematic flowchart of a method 900 implemented at an AMF according to some embodiments of the present disclosure. In a possible implementation, the method 900 may be implemented by the AMF 130 in the example communication system 100A. In another possible implementation, the method 900 may alternatively be implemented by another electronic apparatus independent of the example communication system 100A. For example, the following describes the method 900 by using an example in which the method 900 is implemented by the AMF 130 in the example communication system 100A.

In 920, the AMF 130 receives a seventh request from an access network device, where the seventh request is used to request to establish a session between the access network device and a user plane function UPF, and the seventh request includes identification information of the access network device.

In 940, the AMF 130 sends the seventh request to a session management function SMF.

In some embodiments, the seventh request further includes at least one of the following: indication information of a device that initiates the seventh request; or identification information of a data service task associated with the seventh request.

In some embodiments, the seventh request further includes identification information of a data service task associated with the seventh request, and the identification information of the data service task includes indication information of a device that initiates the seventh request.

In some embodiments, the method may further include: receiving a first request from the access network device, where the first request is used to request to register the access network device, and the first request includes the identification information of the access network device; configuring context information of the access network device based on the first request; sending the first request to a core network device, where the core network device is configured to manage subscription data associated with the access network device; receiving, from the core network device, a response message corresponding to the first request; sending, to a policy control function PCF, a third request associated with the access network device, where the third request is used to request rule information associated with the access network device; receiving, from the PCF, the rule information used to establish the session; sending, to the access network device, the rule information used to establish the session; and sending, to the access network device, a response message corresponding to the first request.

In some embodiments, the method may further include: receiving a fourth request associated with the access network device from a core network device, where the fourth request is used to request to configure context information of the access network device, and the core network device is configured to manage subscription data associated with the access network device; configuring the context information of the access network device based on the fourth request; sending, to the core network device, a response message corresponding to the fourth request; sending, to a PCF, a third request associated with the access network device, where the third request is used to request rule information associated with the access network device; receiving, from the PCF, the rule information used to establish the session; and sending, to the access network device, the rule information used to establish the session.

In some embodiments, the method may further include: receiving a fifth request from the access network device, where the fifth request is used to request to deregister the access network device, and the fifth request includes the identification information of the access network device; sending the fifth request to the core network device, where the core network device is configured to manage the subscription data associated with the access network device; receiving, from the core network device, a response message corresponding to the fifth request; sending, to a PCF, a sixth request associated with the access network device, where the sixth request is used to request to delete or release rule information for the session between the access network device and the UPF; receiving, from the PCF, a response message corresponding to the sixth request; sending, to the access network device, the response message corresponding to the fifth request; and releasing the context information of the access network device.

In some embodiments, the method may further include: receiving a ninth request from the access network device, where the ninth request is used to request to release the session between the access network device and the UPF, and the ninth request includes identification information of the session; and sending the ninth request to the SMF.

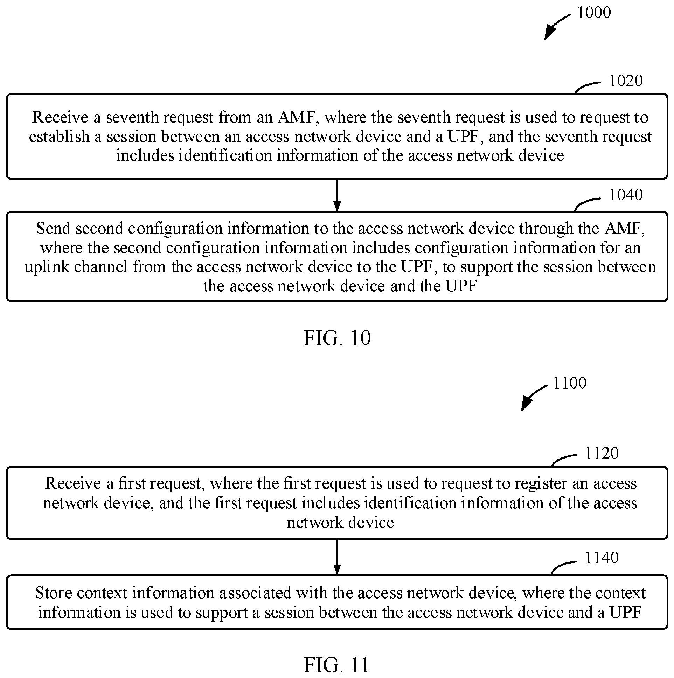

FIG. 10 is a schematic flowchart of a method 1000 implemented at an SMF according to some embodiments of the present disclosure. In a possible implementation, the method 1000 may be implemented by the SMF 140 in the example communication system 100A. In another possible implementation, the method 1000 may alternatively be implemented by another electronic apparatus independent of the example communication system 100A. For example, the following describes the method 1000 by using an example in which the method 1000 is implemented by the SMF 140 in the example communication system 100A.

In 1020, the SMF 140 receives a seventh request from an access and mobility management function AMF, where the seventh request is used to request to establish a session between the access network device and a user plane function UPF, and the seventh request includes identification information of the access network device.

In 1040, the SMF 140 sends second configuration information to the access network device, where the second configuration information includes configuration information for an uplink channel from the access network device to the UPF.

In some embodiments, the seventh request further includes at least one of the following: indication information of a device that initiates the seventh request; or identification information of a data service task associated with the seventh request.

In some embodiments, the seventh request further includes identification information of a data service task associated with the seventh request, and the identification information of the data service task includes indication information of a device that initiates the seventh request.

In some embodiments, the method may further include: sending, based on determining that a device type is an access network device type, an eighth request associated with the access network device to a core network device, where the eighth request is used to request subscription data associated with the access network device, and the core network device is configured to manage the subscription data associated with the access network device; and receiving the subscription data from the core network device.

In some embodiments, the method may further include: receiving a ninth request from the AMF, where the ninth request is used to request to release the session between the access network device and the UPF, and the ninth request includes the identification information of the session; sending a tenth request to the access network device and the UPF, where the tenth request is used to request to release the session between the access network device and the UPF; and sending, to the access network device, a response message or an acknowledgment message corresponding to the ninth request; and releasing context information associated with the session.

FIG. 11 is a schematic flowchart of a method 1100 implemented at a data management core network device according to some embodiments of the present disclosure. In a possible implementation, the method 1100 may be implemented by the data management core network device 170 in the example communication system 100A. In another possible implementation, the method 1100 may alternatively be implemented by another electronic apparatus independent of the example communication system 100A. For example, the following describes the method 1100 by using an example in which the method 1100 is implemented by the data management core network device 170 in the example communication system 100A.

In 1120, the data management core network device 170 receives a first request, where the first request is used to request to register the access network device, and the first request includes identification information of the access network device.

In 1140, the data management core network device 170 stores context information associated with the access network device, where the context information is used to support a session between the access network device and a user plane function UPF.

In some embodiments, the first request is received from an operation, administration and maintenance OAM device, and the method may further include: sending, to the AMF, a fourth request associated with the access network device, where the fourth request is used to request to configure context information of the access network device; receiving, from the AMF, a response message corresponding to the fourth request; and sending, to the PCF, a second request associated with the access network device, where the second request is used to request to update rule information associated with the access network device.

In some embodiments, the method may further include: receiving a fifth request from the AMF, where the fifth request is used to request to deregister the access network device, and the fifth request includes the identification information of the access network device; releasing context information associated with the access network device; and sending, to the AMF, a response message corresponding to the fifth request.

In some embodiments, the method may further include: receiving an eighth request associated with the access network device from a session management function SMF, where the eighth request is used to request subscription data associated with the access network device; and sending the subscription data associated with the access network device to the SMF.

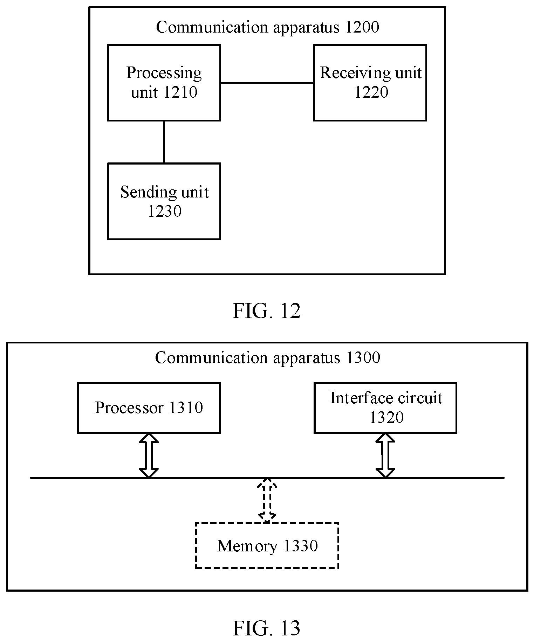

FIG. 12 is a schematic structural diagram of a possible communication apparatus (also referred to as a communication device) according to an embodiment of the present disclosure. The communication apparatus may implement functions of the terminal apparatus or the network apparatus in the foregoing method embodiments. Therefore, beneficial effects of the foregoing method embodiments can also be implemented. In this embodiment of the present disclosure, the communication apparatus may be the access network device 110, the AMF 130, the SMF 140, or the data management core network device 170 in FIG. 1A.

As shown in FIG. 12, the communication apparatus 1200 includes a processing unit 1210, a receiving unit 1220, and a sending unit 1230. The communication apparatus may be configured to implement the function of registering or deregistering the access network device, establishing or deleting a session in the method embodiment shown in any one of FIG. 1 to FIG. 11. In some embodiments, the processing unit may be a processor, the sending unit may be a transmitter, and the receiving unit may be a receiver.

FIG. 13 is a simplified block diagram of a possible communication apparatus (also referred to as a communication device) according to an embodiment of the present disclosure. As shown in FIG. 13, a communication apparatus 1300 includes a processor 1310 and an interface circuit 1320. The processor 1310 and the interface circuit 1320 are coupled to each other. It may be understood that the interface circuit 1320 may be a transceiver or an input/output interface. Optionally, the communication apparatus 1300 may further include a memory 1330, configured to store instructions executed by the processor 1310, store input data required by the processor 1310 to run the instructions, or store data generated after the processor 1310 runs the instructions.

When the communication apparatus 1300 is configured to implement the methods in the foregoing method embodiments, the processor 1310 is configured to perform a function of the processing unit 1210, and the interface circuit 1320 is configured to perform functions of the receiving unit 1220 and the sending unit 1230.

It may be understood that the processor in embodiments of the present disclosure may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

An embodiment of the present disclosure provides a communication system. The communication system may include the communication apparatus in the embodiment shown in FIG. 12, for example, the access network device 110, the AMF 130, the SMF 140, or the data management core network device 170 in FIG. 1A, or a module (for example, a chip) of the access network device 110, the AMF 130, the SMF 140, or the data management core network device 170. Optionally, the access network device 110, the AMF 130, the SMF 140, or the data management core network device 170 in FIG. 1A, or the module (for example, a chip) of the access network device 110, the AMF 130, the SMF 140, or the data management core network device 170 in the communication system may perform the communication method shown in any one of FIG. 1 to FIG. 11.

An embodiment of the present disclosure further provides a circuit. The circuit may be coupled to a memory, and may be configured to perform a procedure related to the access network device 110, the AMF 130, the SMF 140, the data management core network device 170, or a module (for example, a chip) of the access network device 110, the AMF 130, the SMF 140, the data management core network device 170 in any one of the foregoing method embodiments. The chip system may include the chip, and may further include another component like a memory or a transceiver.

It should be understood that the processor mentioned in embodiments of the present disclosure may be a CPU, or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory mentioned in embodiments of the present disclosure may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

It should be noted that when the processor is a general-purpose processor, a DSP, an ASIC, an FPGA or another programmable logic device, a discrete gate, a transistor logic device, or a discrete hardware component, the memory (a storage module) is integrated into the processor.

It should be noted that the memory described in this specification aims to include but is not limited to these memories and any memory of another proper type.

It should be understood that sequence numbers of the foregoing processes do not mean execution sequences in various embodiments of the present disclosure. The execution sequences of the processes should be determined based on functions and internal logic of the processes, and should not be construed as any limitation on the implementation processes of embodiments of the present disclosure.

A person of ordinary skill in the art may be aware that, in combination with the examples described in embodiments disclosed in this specification, modules and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present disclosure.

It may be clearly understood by a person skilled in the art that, for the purpose of convenient and brief description, for a detailed working process of the foregoing system, apparatus, and module, refer to a corresponding process in the foregoing method embodiments, and details are not described herein again.

In the several embodiments provided in the present disclosure, it should be understood that the disclosed communication method and apparatus may be implemented in other manners. For example, the described apparatus embodiment is merely an example. For example, the module division is merely logical function division and may be other division in actual implementation. For example, a plurality of modules or components may be combined or integrated into another system, or some features may be ignored or not performed. In addition, the displayed or described mutual couplings or direct couplings or communication connections may be implemented through some interfaces. The indirect couplings or communication connections between the apparatuses or units may be implemented in electronic, mechanical, or other forms.

The modules described as separate parts may or may not be physically separate, and parts displayed as modules may or may not be physical modules, may be located in one position, or may be distributed on a plurality of network units. Some or all of the units may be selected based on actual requirements to achieve the objectives of the solutions of embodiments.

In addition, functional modules in embodiments of the present disclosure may be integrated into one processing module, or each of the modules may exist alone physically, or two or more modules are integrated into one module.

When the functions are implemented in the form of software functional module and sold or used as an independent product, the functions may be stored in a computer-readable storage medium. Based on this understanding, the technical solutions of the present disclosure may essentially or contribute to the technical solutions or a part of the technical solutions may be embodied in a form of software product. The computer software product is stored in a storage medium, and includes several instructions for instructing a computer device (which may be a personal computer, a server, a network device, or the like) to perform all or some of the steps of the methods described in embodiments of the present disclosure. The computer-readable storage medium may be any usable medium that can be accessed by a computer. This is used as an example but is not limited to: The computer-readable medium may include a random access memory (random access memory, RAM), a read-only memory (read-only memory, ROM), an electrically erasable programmable read-only memory (electrically erasable programmable read-only memory, EEPROM), a compact disc read-only memory (compact disc read-only memory, CD-ROM), a universal serial bus flash disk (universal serial bus flash disk), a removable hard disk, or another optical disc storage, a magnetic disk storage medium or another magnetic storage device, or any other medium that can be used to carry or store expected program code in a form of instruction or data structure and that can be accessed by a computer.

As used in this specification, the term "including" and similar terms thereof should be understood as non-exclusive inclusions, that is, "including but not limited to". The term "based on" should be understood as "at least partially based on". The term "one embodiment" or "this embodiment" should be understood as "at least one embodiment". Terms such as "first", "second", and the like may refer to different objects or a same object, and are merely used to distinguish between specified objects, but do not imply a specific spatial order, a time order, an importance order, or the like of the specified objects. In some embodiments, a value, a process, a selected item, a determined item, a device, an apparatus, a means, a part, a component, or the like is referred to as "optimal", "lowest", "highest", "minimum", "maximum", or the like. It should be understood that such a description is intended to indicate that a selection may be made among many available functional selections, and that such a selection does not need to be better, lower, higher, smaller, larger, or otherwise preferred than other selections in other aspects or in all aspects. As used in this specification, the term "determining" may cover a variety of actions. For example, "determining" may include operating, calculation, processing, export, investigation, lookup (for example, lookup in a table, database, or another data structure), finding, and the like. In addition, "determining" may include receiving (for example, receiving information), accessing (for example, accessing data in a memory), and the like. In addition, "determining" may include parsing, selection, choice, establishment, and the like.

The foregoing descriptions are merely specific implementations of this application, and are not intended to limit the protection scope of embodiments of this application. Any variation or replacement that a person skilled in the art can easily figure out within the technical scope disclosed in embodiments of this application shall fall within the protection scope of embodiments of this application. Therefore, the protection scope of embodiments of this application should be subject to the protection scope of the claims.

## Claims

1. A method for managing a network device session, comprising:
sending a first request to an access and mobility management function AMF, wherein the first request is used to request to establish a session between an access network device and a user plane function UPF, and the first request comprises identification information of the access network device; and
receiving first configuration information from a session management function SMF through the AMF, wherein the first configuration information comprises configuration information for an uplink channel from the access network device to the UPF.

2. The method according to claim 1, wherein the first request further comprises at least one of the following:
indication information of a device that initiates the first request; or
identification information of a data service task associated with the first request.

3. The method according to claim 1, wherein the first request further comprises identification information of a data service task associated with the first request, and the identification information of the data service task comprises indication information of a device that initiates the first request.

4. The method according to any one of claims 1 to 3, wherein the method further comprises:
sending a second request to the AMF, wherein the second request is used to request to release the session between the access network device and the UPF, and the second request comprises identification information of the session; and
receiving, from the SMF through the AMF, a response message corresponding to the second request.

5. The method according to any one of claims 1 to 4, wherein the method further comprises:
sending a third request to the AMF, wherein the third request is used to request to register the access network device, and the third request comprises the identification information of the access network device;
receiving, from the AMF, rule information used to establish the session; and
receiving, from the AMF, a response message corresponding to the third request.

6. The method according to any one of claims 1 to 5, wherein the method further comprises:
sending a fourth request to the AMF, wherein the fourth request is used to request to deregister the access network device, and the deregistration request comprises the identification information of the access network device; and
receiving, from the AMF, a response message corresponding to the fourth request.

7. The method according to any one of claims 1 to 6, wherein the first request is sent through an N2 interface, and the first configuration information is received through the N2 interface.

8. A method for managing a network device session, comprising:
receiving a first request from an access network device, wherein the first request is used to request to establish a session between the access network device and a user plane function UPF, and the first request comprises identification information of the access network device; and
sending the first request to a session management function SMF.

9. The method according to claim 8, wherein the first request further comprises at least one of the following:
indication information of a device that initiates the first request; or
identification information of a data service task associated with the first request.

10. The method according to claim 8, wherein the first request further comprises identification information of a data service task associated with the first request, and the identification information of the data service task comprises indication information of a device that initiates the first request.

11. The method according to any one of claims 8 to 10, wherein the method further comprises:
receiving a third request from the access network device, wherein the third request is used to request to register the access network device, and the third request comprises the identification information of the access network device;
configuring context information of the access network device based on the third request;
sending the third request to a core network device, wherein the core network device is configured to manage subscription data associated with the access network device;
receiving, from the core network device, a response message corresponding to the third request;
sending, to a policy control function PCF, a fifth request associated with the access network device, wherein the fifth request is used to request rule information associated with the access network device;
receiving, from the PCF, the rule information used to establish the session;
sending, to the access network device, the rule information used to establish the session; and
sending, to the access network device, the response message corresponding to the third request.

12. The method according to any one of claims 8 to 10, wherein the method further comprises:
receiving, from a core network device, a sixth request associated with the access network device, wherein the sixth request is used to request to configure context information of the access network device, and the core network device is configured to manage subscription data associated with the access network device;
configuring the context information of the access network device based on the sixth request;
sending, to the core network device, a response message corresponding to the sixth request;
sending, to a PCF, a fifth request associated with the access network device, wherein the fifth request is used to request rule information associated with the access network device;
receiving, from the PCF, the rule information used to establish the session; and
sending, to the access network device, the rule information used to establish the session.

13. The method according to any one of claims 8 to 12, wherein the method further comprises:
receiving a fourth request from the access network device, wherein the fourth request is used to request to deregister the access network device, and the fourth request comprises the identification information of the access network device;
sending the fourth request to the core network device, wherein the core network device is configured to manage the subscription data associated with the access network device;
receiving, from the core network device, a response message corresponding to the fourth request;
sending, to the PCF, a seventh request associated with the access network device, wherein the sixth request is used to request to release the rule information for the session between the access network device and the UPF;
receiving, from the PCF, a response message corresponding to the seventh request;
sending, to the access network device, the response message corresponding to the fourth request; and
releasing the context information of the access network device.

14. The method according to any one of claims 8 to 13, wherein the method further comprises:
receiving a second request from the access network device, wherein the second request comprises identification information of the session; and
sending the second request to the SMF.

15. A method for managing a network device session, comprising:
receiving a first request from an access and mobility management function AMF, wherein the first request is used to request to establish a session between an access network device and a user plane function UPF, and the first request comprises identification information of the access network device; and
sending first configuration information to the access network device through the AMF, wherein the first configuration information comprises configuration information for an uplink channel from the access network device to the UPF.

16. The method according to claim 15, wherein the first request further comprises at least one of the following:
indication information of a device that initiates the first request; or
identification information of a data service task associated with the first request.

17. The method according to claim 15, wherein the first request further comprises identification information of a data service task associated with the first request, and the identification information of the data service task comprises indication information of a device that initiates the first request.

18. The method according to claim 16 or 17, wherein the method further comprises:
sending, to a core network device based on determining that the indication information of the device is access network device indication information, an eighth request associated with the access network device, wherein the eighth request is used to request subscription data associated with the access network device, and the core network device is configured to manage the subscription data associated with the access network device; and
receiving the subscription data from the core network device.

19. The method according to any one of claims 15 to 18, wherein the method further comprises:
receiving a second request from the AMF, wherein the second request is used to request to release the session between the access network device and the UPF, and the second request comprises identification information of the session;
sending, to the access network device and the UPF through the AMF, an indication for releasing the session;
sending, to the access network device through the AMF, a response message corresponding to the second request; and
releasing context information associated with the session.

20. A method for managing a network device session, comprising:
receiving a third request, wherein the third request is used to request to register an access network device, and the third request comprises identification information of the access network device; and
storing context information associated with the access network device, wherein the context information is used to support a session between the access network device and a user plane function UPF.

21. The method according to claim 20, wherein the third request is received from an operation, administration and maintenance OAM device, and the method further comprises:
sending, to an AMF, a sixth request associated with the access network device, wherein the sixth request is used to request to configure context information of the access network device;
receiving, from the AMF, a response message corresponding to the sixth request; and
sending, to a PCF, a ninth request associated with the access network device, wherein the ninth request is used to request to update rule information associated with the access network device.

22. The method according to claim 20 or 21, wherein the method further comprises:
receiving a fourth request from the AMF, wherein the fourth request comprises the identification information of the access network device;
releasing the context information associated with the access network device; and
sending, to the AMF, a response message corresponding to the fourth request.

23. The method according to any one of claims 20 to 22, wherein the method further comprises:
receiving, from a session management function SMF, an eighth request associated with the access network device, wherein the eighth request is used to request subscription data associated with the access network device; and
sending, to the SMF, the subscription data associated with the access network device.

24. A communication apparatus, comprising:
a processor; and
a memory, wherein the memory stores instructions, and when the instructions are executed by the processor, the communication apparatus is caused to perform the method according to any one of claims 1 to 7.

25. A communication apparatus, comprising:
a processor; and
a memory, wherein the memory stores instructions, and when the instructions are executed by the processor, the communication apparatus is caused to perform the method according to any one of claims 8 to 14.

26. A communication apparatus, comprising:
a processor; and
a memory, wherein the memory stores instructions, and when the instructions are executed by the processor, the communication apparatus is caused to perform the method according to any one of claims 15 to 19.

27. A communication apparatus, comprising:
a processor; and
a memory, wherein the memory stores instructions, and when the instructions are executed by the processor, the communication apparatus is caused to perform the method according to any one of claims 20 to 23.

28. A communication system, comprising: the communication apparatus according to claim 24, the communication apparatus according to claim 25, the communication apparatus according to claim 26, and the communication apparatus according to claim 27.

29. A computer-readable storage medium, wherein the computer-readable storage medium stores instructions, and when the instructions are executed by a device, the device is caused to perform the method according to any one of claims 1 to 7.

30. A computer-readable storage medium, wherein the computer-readable storage medium stores instructions, and when the instructions are executed by a device, the device is caused to perform the method according to any one of claims 8 to 14.

31. A computer-readable storage medium, wherein the computer-readable storage medium stores instructions, and when the instructions are executed by a device, the device is caused to perform the method according to any one of claims 15 to 19.

32. A computer-readable storage medium, wherein the computer-readable storage medium stores instructions, and when the instructions are executed by a device, the device is caused to perform the method according to any one of claims 20 to 23.

33. A computer program product, wherein the computer program product comprises instructions, and when the instructions are run on a computer, the computer is caused to perform the method according to any one of claims 1 to 7.

34. A computer program product, wherein the computer program product comprises instructions, and when the instructions are run on a computer, the computer is caused to perform the method according to any one of claims 8 to 14.

35. A computer program product, wherein the computer program product comprises instructions, and when the instructions are run on a computer, the computer is caused to perform the method according to any one of claims 15 to 19.

36. A computer program product, wherein the computer program product comprises instructions, and when the instructions are run on a computer, the computer is caused to perform the method according to any one of claims 20 to 23.
